Europäisches Patentamt

European Patent Office

Office européen des brevets

(19)

(11) **EP 1 302 111 A1**

(12) **EUROPEAN PATENT APPLICATION**

(43) Date of publication:
 **16.04.2003 Bulletin 2003/16**

(51) Int Cl.7: **A23G 3/00**, A23L 1/305

(21) Application number: **01308595.6**

(22) Date of filing: **09.10.2001**

(84) Designated Contracting States:
 **AT BE CH CY DE DK ES FI FR GB GR IE IT LI LU MC NL PT SE TR**
 Designated Extension States:
 **AL LT LV MK RO SI**

(71) Applicant: **Bariatrix Products International, Inc. Lachine, Quebec H8T 3P3 (CA)**

(72) Inventor: **Jones, Dennis**
 **Shelburne, Vermont 05482 (US)**

(74) Representative: **Khoo, Chong-Yee**
 **D Young & Co,**
 **21 New Fetter Lane**
 **London EC4A 1DA (GB)**

(54) **Dietary composition and method**

(57) We describe a low calorie confectionery comprising: (a) proteinaceous material having low water absorption properties and medium to high emulsification properties; (b) carbohydrate material selected from the group consisting of: digestible carbohydrate, indigestible carbohydrate, and a mixture thereof, wherein said proteinaceous material and said carbohydrate material are present in a relative weight ratio of from 1:0 to 1:0.999. We also provide use of the confectionery for inducing or maintaining weight loss, optionally with an increase in muscle mass.

**EP 1 302 111 A1**

**Description**

This invention relates to the field of weight loss, and, in particular, a confectionery for use as part of a low calorie diet, especially a very low calorie diet. We describe in particular a confectionery product in the form of a diet bar having a protein to carbohydrate relative weight ratio higher than 1.

In general, a preferred diet does all of the following:

1. It gives an energy deficit; less calories must be consumed than are required to meet both the basal metabolic requirements (the energy cost of running the body) and the energy cost of daily activity. In other words, the diet provides less calories than are used each day, so fat reserves are utilized to make up the difference.

2. It preserves full functionality of physiological and biochemical systems and compensates for adaptions to the low energy intake which otherwise would reduce or prevent loss of weight. Normally, when less calories are one consumed than needed, metabolic rate falls, and fewer calories are burned. This is a normal response built into humans (and other animals) to help them get through times of famine, but is not helpful for weight loss. The good diet prevents metabolic rate from falling.

3. It favours loss of weight predominantly from fat tissue and permits no greater loss of lean body mass than is physiologically acceptable. Fat is preferably lost, but some diets actually cause loss of muscle and organ tissues, which may never be replaced. This weakens the dieter, and as demonstrated with yo-yo dieters on bad diets, the dieter will get weaker with every cycle, because of lost muscle.

4. It must prevent occurrence of deficiencies, whether clinical or sub-clinical. Many bad diets do not allow for enough essential fatty acids, potassium or other essential nutrients, and may cause serious side effects.

Diet programs which do not meet all these requirements are potentially hazardous and may not only cause adverse effects, but may result in irreparable harm in either short or long term.

However, high protein weight loss diets, appropriately supplemented with vitamins, minerals and essential fatty acids, have proven the safest and most effective types of diet in weight loss.

In fact, research performed and published over the last 20 years indicates that high protein weight loss diets offer substantial advantages over isocaloric diets with lower amounts of protein and are completely safe, whereas low calorie diets with insufficient protein may cause considerable damage, some of which may be permanent. A normal guideline is a minimum of 1.5 g protein per kg of ideal body weight per day, with a maximum of about 2.5 g protein per kg ideal body weight per day.

The major criticism levied at low calorie diets of any type is that protein can be lost from vital tissues, and from this point of view alone, a demonstrated high protein intake serves as a counter statement. However, from the purely physicochemical point of view, it offers advantages to bias the equilibrium between "protein in" and "protein out" strongly in favour of intake, thus ensuring an adequate amount of available amino-acids.

The term nitrogen balance is, in effect, synonymous with protein balance, and ensuring that the body is in nitrogen balance (or equilibrium) is an important consideration when low calorie diets are given for more than a few days.

A negative nitrogen balance implies that body (structural) protein is being lost, and would therefore support the criticism of low calorie diets often heard, namely that they cause loss of lean body mass, possibly from vital organs. In this respect, however, it must be noted that since a portion of the weight loss consists of fat-free mass that in turn contains a small amount of protein, a minor reduction of total body protein could be expected to be a consequence of any weight loss regime in which no steps were taken to facilitate the efficient recycling of the high quality protein released from the cytoplasm of adipose tissue cells.

Bistrian et al. (1981) showed that a diet of about 440 kilocalories per day providing 0.8 grams protein per kg ideal body weight per day was not capable of maintaining nitrogen balance. The baseline diet used by these investigators, which provided 1.5 grams of protein per kg ideal body weight did maintain nitrogen equilibrium.

Vasquez et al. (1985), in a rather complex study with obese volunteers, showed that nitrogen balance was positive on a 500 kilocalorie per day diet composed solely of protein (125 grams per day) given for one week, but was negative in the same volunteers when protein intake was reduced to 50 grams per day and the difference was made up with carbohydrate.

Comparable results were reported by Oi et al. (1987), who conducted balance studies in obese subjects given 1100 kilocalories per day with progressively diminishing protein intakes. They found that there was a clear relationship between protein intake and nitrogen balance, and calculated that the mean requirement for nitrogen equilibrium was 1.26 grams protein per kg body weight per day.

| PROTEIN INTAKE AND NITROGEN BALANCE ON ISOCALORIC DIETS (1100 KCAL) (in mg N/kg/day) | | |
|---|---|---|
| | HIGH PROTEIN: (6 patients) | LOW PROTEIN: (6 patients) |
| INTAKE | 52 +/- 29 | 91 +/- 15 |
| URINE | 137 +/- 27 | 99 +/- 23 |
| FECES | 13 +/- 3 | 19 +/- 5 |
| BALANCE | + 1 +/- 14 | - 30 +/- 18 |
| Calculated protein requirement for nitrogen balance: 1.26 g/kg/day. | | |

A study in massively obese patients reported by Pasquali et al. (1987) showed that nitrogen balance on Very Low Calorie Diets (500 kilocalories per day) was better with 60 grams of protein than with 41 grams of protein, but was still negative over an 8-week period in most subjects.

Gougeon-Reyburn et al., (1989), in a comparison of the effects of low energy protein and carbohydrate diets, showed that the major determinant of protein balance is protein intake, though a diet based solely on carbohydrate (400 kilocalories/day) did conserve some protein in comparison to total fasting. However, the diet devoid of protein caused greater losses of potassium as well as a more marked acidosis.

Studies in obese subjects using a VLCD of 412 kilocalories per day, of which 90% derived from protein (1.2 grams per kg ideal body weight), showed that after an initial net loss of nitrogen, all subjects attained nitrogen equilibrium in the third week, irrespective of protein quality (Gougeon, 1992; Gougeon et al., 1992a). It was, however, shown in an extension of this study (Gougeon et al., 1992b) that when proteins of exclusively low biological value were used, nitrogen balance again became negative at about the 6th week of use, while use of a protein blend of higher biological value prevented the downturn in nitrogen balance.

The initial loss of nitrogen appeared to relate to the reduction in the lean tissue component of the adipose tissue, while the initial lack of a difference in response to proteins of low or high biological value appeared to relate to release of essential amino acids for re-utilization, thus reflecting mechanisms to conserve essential amino acids.

It may be concluded from the foregoing that nitrogen equilibrium or even a positive nitrogen balance can be achieved on a low calorie diet providing the recommended amount of 1.5 grams protein per kg ideal body weight per day.

Further, protein has a thermogenic effect which boosts metabolism to a much greater extent that other food constituents, and augments the burning of calories. Conventional wisdom was that overweight and obesity were caused by "slow metabolism", or "hormones", and many who are overweight claim that they do not overeat. Though statistics do not support this contention (disappearance data for food consumption shows several hundred calories per capita excess over requirements), there is veracity in the observation that body weight changes in the upward direction do not relate directly to calories consumed.

It is indeed recognized that hormonal status may be a major contributor to the etiology of obesity, and hypothyroidism, for example, is often associated with obesity. Thyroid function which is in the lower part of the normal range may thus be a contributor in some cases of obesity (James, 1983), but this is a complex subject, and mechanisms are not fully elucidated. Other hormonal systems may also be involved in weight gain. However, the incidence of obesity which is indisputably due to hormonal causes is very low, and such cases require treatment for the underlying condition rather than dietary therapy for the obesity itself; and removal of the cause generally results in reduction in body weight.

Though some authorities still consider that a lower Resting Metabolic Rate (RMR; such as would be associated with reduced thyroid function) is the main factor, and can adduce experimental data to support this rationale, the present consensus of scientific opinion indicates that the RMR of obese subjects is generally above normal, unless expressed per kg body weight, in which case it is below normal (Hoffmans et al., 1979), and points at thermogenesis as being the metabolic area which is defective in those inclined to obesity (Heleniak and Aston, 1989).

In the pre-obese and obese states, dietary thermogenesis is reduced, and the "energy cost" to the body of handling the dietary intake is lower than that of normal individuals not inclined to obesity (Jequier, 1987, 1989).

Thus on equivalent dietary intakes, a person with reduced thermogenesis may put on weight while a person with the same physical characteristics but normal thermogenesis will remain in weight equilibrium. The difference may be as much as 20%; in other words, the individual predisposed to obesity may require 20% less food than a normal individual to maintain weight in equilibrium, and if intake is increased, body weight increases. An interesting observation is that obese subjects have a very poor thermogenic response to dietary fat, and may use as little as 3% of the energy in the fat for "handling" purposes, so they are particularly susceptible to further weight gain when consuming a high fat diet.

Thus the old concept that the ability to put on weight was due to a lower Basal Metabolic Rate (BMR), though not completely discredited, is now considered to be only a minor contributor to weight problems, and the variation in dietary thermogenesis (which manifests as an increase in Resting Metabolic Weight; RMR) is now known to be the major factor involved. Since the different macronutrients (protein, carbohydrate, fat) all have different thermogenic activities, manipulation of dietary composition can aid in preventing obesity, and can also assist in treatment of pre-existent obesity. In other words, though thermogenesis can contribute to obesity and overweight, it can also be put to use in treating these conditions.

Effects of food on RMR have long been known (Davidson et al., 1975), and is sometimes referred to as Specific Dynamic Action (SDA). It was thought that this had little practical application, but the recent work cited above on the decreased thermogenic response to food in individuals who are either obese or predisposed to obesity has resulted in renewed interest in the exploitation of this physiological phenomenon in treatment of obesity.

The SDA of food is very variable, even in normal individuals, but as noted, it is reduced in obese subjects. The overall effect may be to increase the metabolic rate by as much as 40% for periods of time up to several hours (Garrow, 1978). Protein has a greater effect than fat, and carbohydrates generally have the least effect, but the SDA is difficult to measure, and there is still no absolute consensus on magnitude and duration after various types of food. However, there is agreement that protein is more active than the other macronutrients. Thus when using low calorie diets, the greatest advantage is obtained with high protein, low carbohydrate diets.

As demonstrated by Rabast et al. (1979), the effect can be quite dramatic; these investigators gave two comparable groups of obese subjects isocaloric diets (1000 kilocalories per day), one of which was low carbohydrate (25 g per day) and high in fat, the other high carbohydrate (170 g per day) and low fat. Both contained 46 g protein per day. Over a 50 day period, weight loss was 14.0 kg in the group given the low carbohydrate diet, but only 9.8 kg in the group receiving the high carbohydrate diet.

Though in this case protein content was the same in both diets, the overall thermogenic effect was clearly lower with the high carbohydrate diet, which in view of the known poor thermogenic effect of carbohydrate was predictable.

DAILY WEIGHT LOSS IN PATIENTS ON ISOCALORIC DIETS (1000 KCAL)

| LOW CARBOHYDRATE: | HIGH CARBOHYDRATE: |
|---|---|
| (25 patients) | (20 patients) |
| 362 +/- 18.2 g | 298 +/- 17.9 g |

Rabast et al., 1979 (Significant decreases in blood glucose, cholesterol, triglycerides and blood pressure were also seen.)

Oi et al., (1987) also found that weight loss was improved on the high protein diet:

| WEIGHT LOSS ON ISOCALORIC DIETS (1100 KCAL) (kg lost over a 2-week period) | |
|---|---|
| HIGH PROTEIN: (6 patients) | LOW PROTEIN: (6 patients) |
| 2.3+/-0.5 | 1.4+/-0.3 |

In addition, protein has an anabolic effect of rebuilding lean tissue instead of breaking it down.

Anabolic effects of ingested protein appear to be due to a number of mechanisms, the most important of which are probably due to Growth Hormone, somatomedins, and the catecholamines. The breakdown products of protein after digestion include the amino-acid arginine. This amino-acid is interesting in that it stimulates release of growth hormone (GH) from the pituitary.

GH is a good anabolic agent (superior to anabolic steroids), and is secreted throughout life, generally in short bursts during REM sleep. These "bursts" occur more frequently in children and adolescents. Most, if not all, of the metabolic effects of GH are actually mediated by the somatomedins, a family of small peptides which resemble proinsulin in amino-acid composition and structure, and have an anabolic insulin-like action on muscle and fat tissues (Hall, 1983). There are also circulating inhibitors, which counteract the effects of the somatomedins and appear to form part of the regulatory process.

Somatomedins are formed in the liver, in response to GH, insulin, and, interestingly, nutritional factors, in particular dietary protein. Thus the actual substances which mediate the action of growth hormone, and may assist in mediating some of the actions of insulin, can be produced independently of growth hormone in response to a high intake of dietary protein.

GH itself may also have a direct stimulatory effect on protein synthesis by increasing amino-acid transport into cells, and this effect is <u>not</u> subject to inhibition by the endogenous inhibitors which block or modulate the metabolic actions of the somatomedins.

The essential amino acids phenylalanine and tyrosine are also used as precursors for adrenaline and noradrenaline. The latter in particular appears to have anabolic effects through mechanisms which are poorly understood but probably relate to the effects of this hormone on the metabolism in general.

The direct anabolic effects of a high protein diet are: the amino acid arginine stimulates release of growth hormone; dietary protein directly stimulates release of somatomedins; growth hormone and the somatomedins are potent anabolic agents; They stimulate amino-acid uptake into protein. Phenylalanine and tyrosine act as precursors for noradrenaline, which also has anabolic effects on muscle.

There are thus at least three mechanisms of benefit associated with a high protein diet; the anabolic effect of the somatomedins, which may be negated to a greater or lesser effect by the presence of circulating inhibitors, but is probably still of net benefit, the effect of GH itself on amino-acid transport across cell membranes, and the effects of increased availability of noradrenaline.

The combination of good circulating levels of amino-acids, improved synthesis of protein and facilitation of amino-acid transport across membranes which thus results from a high dietary intake of protein therefore contributes considerably to the prevention of a possible loss of lean body mass (protein) from the body during weight reduction, particularly from vital organs and muscle tissue.

An interesting observation was made by Davis and Phinney (1990), who compared a Protein Sparing Modified Fast (PSMF; 450 - 550 kilocalories per day) and a fixed composition Very Low Calorie Diet (420 kilocalories per day, but not rich in protein) on aerobic and anaerobic performance of obese subjects. The PSMF provided 1.5 grams protein per kg ideal body weight per day, and less than 10 grams carbohydrate. The Formula VLCD provided 70 grams protein and 30 grams carbohydrate per day. Both aerobic and anaerobic function decreased on the VLCD, while they were maintained on the PSMF. The differences were significant.

There was no significant difference in weight loss between the groups despite higher caloric content of the PSMF.

The authors concluded that the higher (and individualized) protein intake on the PSMF helps preserve functional tissue. In short, the PSMF is better at maintaining physiological function than a conventional VLCD.

Moreover, protein helps improves mood add suppresses feelings of hunger. The breakdown products of protein after digestion include the amino acids tryptophan, tyrosine, phenylalanine, histidine, glutamic acid and aspartic acid. The first five are confirmed precursors for various neurotransmitters of importance in the function of the central nervous system, while glutamic acid (in addition to a precursor function) and aspartic acid are strongly suspected of themselves being inhibitory neurotransmitters (Cooper et al., 1986). For example, tyryptophan yeilds serotonin, tyrosine and phenylalanine yeild catecholamines, histidine yeilds histamine, and glutamic acid yeilds GABA. In additon, glutamic and aspartic acids may also be neurotransmitters.

Tryptophan is the precursor of 5-hydroxy-tryptamine (serotonin; 5-HT), and serotonin has well-documented effects on the satiety centre; it induces a sensation of fullness.

This is actually different from preventing the feeling of hunger, but is equally important. Suppressing hunger stills the feeling of wanting to eat, while inducing satiety causes eating to stop more quickly, and is thus conducive to eating smaller meals.

Tryptophan, like some of the drugs used to treat obesity, increases the availability of serotonin in the central nervous system (Nathan and Rolland, 1987), and this is possibly the single most important factor in controlling dietary intake in human beings. However, tyrosine and phenylalanine are catecholamine precursors; they therefore increase the availability of both dopamine and noradrenaline in the central nervous system. This is analogous to the effect of tryptophan on serotonin, and likewise, their action is similar to that of the classical anorectic drugs such as dexamphetamine. They therefore serve to suppress hunger, by increasing noradrenaline levels in the hunger centre. In this respect, they may parallel a postulated effect of ketosis.

In practical terms, tyrosine and phenylalanine probably make little contribution to control of appetite in man; at the time hunger is experienced, blood levels of free amino-acids tend to be low, and thus the transfer of these amino-acids into the central nervous system is at low ebb. They may, however, reinforce the effects of tryptophan at meal-times. It should be noted that many "serotoninergic" drugs have anti-depressive or mood-elevating properties, and the observed effects of high protein diets on mood would hereby be explained. Histidine, glutamic acid and aspartic acid may also play a role, but it has not yet been clarified.

The relationship between post-prandial levels of free amino-acids in the blood and the central nervous system levels of the neurotransmitters for which they are precursors is very complex, and studies in man and animals have given conflicting, sometimes inexplicable, results. However, it is very clear (Wurtman, 1987) that brain serotonin synthesis is coupled to food-induced changes in plasma composition, and catecholamine synthesis is thought to show the same relationship. What is known with certainty is that plasma levels of free amino-acids increase several fold after a protein-rich meal (though not all amino-acids increase to the same level; a possible expression of preferential peripheral utilization), and that insulin secretion (for example after a meal rich in carbohydrate) decreases levels of all amino-acids with the possible exception of tryptophan. It is also clear that increased brain serotonin levels resulting from greater availability of tryptophan (or from drug treatment) suppress cravings for carbohydrate.

Other known facts are that different proteins have different effects on brain serotonin levels; lactalbumen, rich in tryptophan, gives a better response than proteins with a more balanced amino-acid composition, and interestingly, low quality proteins such as gelatine supplemented with tryptophan also give good responses. This latter fact is readily explained; all the so-called "large neutral amino acids" have to compete for the same transport mechanism into the brain, so that in the presence of tyrosine, histidine or phenylalanine, tryptophan transport can actually be reduced.

Thus if tryptophan is the most prominent amino-acid in the mixture produced by digestion, it will readily pass into the brain.

In this respect, a recent study by Anderson et al. (1990) revealed that dieting reduces plasma tryptophan levels in women and has an effect on brain 5-HT function. These effects were not seen in men.

To summarize in simpler terms, the quality and quantity of protein consumed can affect certain functional centres in the brain, and many of the observed effects of high protein diets, such as lack of hunger (or better, feeling of satiety) and elevation of mood could be explained by conversion of tryptophan to serotonin in the brain. The sleepiness that may occur after a large meal may also, in part, be explained by this mechanism, though in this case diversion of blood flow to the gastro-intestinal tract (to assist in digestion) and away from the brain is probably the most important factor. However, tryptophan is only part of the story, and the full explanation almost certainly involves the other amino-acid precursors of neurotransmitters in a complex and interrelated fashion.

Stated at the most superficial level, composition of the diet itself regulates satiety, hunger and cravings; the high protein, low carbohydrate diet has physiological actions that are compatible with weight reduction programmes and it facilitates adherence to such programmes.

In addition, protein diets are favorable over those that function by way of ketosis. Ketone bodies are normal products of lipid metabolism, though generally not present in great amounts. They result from the breakdown of acetoacetyl-coenzyme A, itself derived from acetyl-coenzyme A. Under normal circumstances, most of this latter substance is oxidized directly in the liver, or used to build up fats, but when the body is in negative energy balance, using fats rather than storing them, the flow is in the reverse direction, and acetyl-coenzyme A is being produced from fatty acids rather than the reverse. There is a link between liver content of glycogen (the way in which carbohydrate is stored) and the production of ketone bodies, again very complicated, but in essence it means that when the liver has enough glycogen (from a high carbohydrate intake), acetyl-coenzyme A is reconverted into fatty acids rather than into the acetoacetyl compound which ends up as ketone bodies. Thus to generate the ketosis, carbohydrate intake must be kept low.

In the absence of glucose, brain and many other tissues adapt readily to use of ketone bodies as a source of energy. Thus the overweight or normal person, deprived of food, switches over to being a "ketone burner".

This can help "push" the metabolism into the protein-sparing mode, but the same effect can be obtained with a non-ketogenic protein diet, without the risk of side effects. Using ketosis as a tool to lose weight is something that should only be done under medical supervision.

The hunger-suppressing effect of ketosis (as distinct from the satiety-inducing effect of protein) was strongly commented by Duncan et al. (1962), and has subsequently been investigated by Blackburn and his colleagues (see, for example, Lindner & Blackburn, 1976). It is generally accepted (Jones, 1979, 1981) that induction of ketosis creates a mental state of mild euphoria, and suppresses hunger.

Mood changes have been conclusively demonstrated in ketotic patients undergoing therapy with low calorie diets (Jones, unpublished observations). The mechanism involved is not clearly understood, but the moderate elevation of ketone bodies in the blood appears to have a range of behavioural properties, unrelated to the calorie content per se.

Wadden et al., (1985), for example, compared groups of patients on isocaloric PSMF and non-ketogenic formula diets. They found that patients on the PSMF had significantly less hunger, and were also much less pre-occupied with food (a behavioural parameter that is not necessarily closely related to hunger sensations). Davies et al. (1989) found that hunger scores increased as the Calorie content of a Very Low Calorie Diet was increased.

Silverstone et al. (1966) could not find a direct relationship between levels of ketone bodies and hunger, and this has been the experience of other investigators (Baird et al., 1974; Howard, 1981). Other groups (Apfelbaum et al., 1967, 1981) claim that the suppression of hunger increases as the ketosis becomes more severe, and strive to induce moderate to severe ketosis in their studies.

The general consensus is that while suppression of hunger (and other mood-related effects) may be triggered by ketosis, equivalent results can be obtained by ensuring that protein intake is sufficiently high, and that this is a much more "natural" way to help dieters cope with their low calorie diet.

It has been argued that the PSMF, devoid or almost completely devoid of carbohydrate, is the most effective dietary approach to the treatment of obesity, because it gives rise to the greatest degree of ketosis, but this argument lacks experimental verification. While it is clear that ketosis has some interesting effects, it does not necessarily help weight loss and can be risky. In fact, some studies have indicated that the presence of a moderate amount of available carbohydrate can improve rates of weight loss, increase the protein-sparing effects (through reduction of gluconeogenesis) and partially offset some metabolic consequences of the lack of dietary carbohydrate, such as the increase in blood uric acid levels (Vasquez et al., 1995). Such research has also indicated that with regard to protein sparing on low calorie diets, the effects of protein and carbohydrate are independent but additive. Thus there are advantages to the use of high protein diets which are not ketogenic.

The inclusion of moderate amounts of fat in the high protein diet optimizes body fat composition, and Flatt (1995) has shown that lipogenesis in humans significantly increases when the fat content of a diet falls below 10% of calories.

Thus the use of very low fat diets increases body fat content, and in the presence of protein and absence of sufficient carbohydrate can create a complex metabolic chain where protein is converted to carbohydrate via gluconeogenesis, and the carbohydrate in turn is converted to fat by lipogenesis, with an ultimate reduction in protein sparing.

The presence of fat in the diet, and in particular essential fatty acids (EFAs), has also been related to increases in rates of weight loss. The fact that patients on low calorie diets are at greater risk of EFA deficiency than the general population is well known, is in itself sufficient justification for assuring adequate EFA intake, but EFAs do more than prevent skin problems, gall bladder problems or a rise in cholesterol; they actually contribute to fitness and weight loss. EFAs of the omega-6 and omega-3 families have been shown to increase thermogenesis. It is not known whether this is an intrinsic consequence of their mechanisms of action (as precursors for eicosanoids and as membrane constituents), or whether it merely represents the rectification of a pre-existent but unsuspected EFA deficiency. Goubern et al. (1990), for example, showed that brown adipose tissue cells recovered from EFA-deficient rats responded poorly to noradrenaline (norepinephrine; the hormone which stimulates thermogenesis), but that addition of linoleic acid (omega-6 EFA) and the saturated fatty acid, palmitic acid, to the medium normalized the response.

Alam et al. (1995) also presented evidence that cyclic adenosine monophosphate (cAMP) production can be impaired in EFA deficiency, which would manifest as decreased sensitivity to catecholamines, with subsequent reduced thermogenesis.

Clandinin et al. (1992) similarly showed that linoleic acid increased the binding of insulin to adipose tissue cells (and thus inproved their metabolic responses). These researchers also reported that omega-3 EFAs increased the responsiveness of muscles to insulin, and significantly increased the rate of glucose uptake by the muscle. Takada et al. (1994) showed that a dietary intake of gammalinolenic acid increased the ability of the liver to oxidize fats.

At an empirical level, Bucci (1994) cites studies which have shown that supplementation with long chain omega-3 EFAs (from fish oil) improves aerobic metabolism, while some research groups (Cunnane et al., 1986; Jones and Schoeller, 1988) have shown that increases in EFA intake improve rates of weight loss by a presumed thermogenic mechanism and also improve the efficiency of energy-generating metabolic processes in the body.

Accordingly, a favorable diet comprises significant daily intake of protein, preferably 1.5 g per kg ideal body weight per day; wherein 60 - 70 g should be of biological value, but once an adequate intake of essential amino acids has been assured, the remainder may be of lesser biological value. Preferably, protein should be of high digestibility.

A favorable diet may also comprises a moderate intake of carbohydrate, sufficient to substantially prevent ketosis, preferably about 1.5 g per kg ideal body weight per day. Preferably, this should include simple sugars and complex carbohydrates, including some dietary fibre. The presence of simple sugars may be important for optimal absorption. In this connection, absorption of amino acids resulting from the digestive breakdown of protein in the lumen of the intestine is an active process, utilizing significant amounts of energy.

Ideally, the cells of the intestinal wall oxidise glucose as an energy source, though as with cells of other tissues, they can utilize ketone bodies, amino acids and free fatty acids. The liver and kidney are the only gluconeogenetic organs in the body, and during profound carbohydrate restriction, the role of the kidney gradually increases. In other words, gluconeogenesis does not occur in the cells of the intestinal wall whose function is to actively transport amino acids resulting from protein digestion, therefore glucose availability in these cells is reduced. Presence of small amounts of simple sugars in the mixture presented for absorption may help offset this reduced availability of the preferred substrate and improve the efficiency of amino acid absorption.

A moderate intake of fat rich in EFAs but free from "trans" fatty acids; at least 10% of energy, but probably less than 24%, and the daily intake of vitamins is also preferred.

Very low calorie formula diet containing the minimum daily requirements of each of the minerals, proteins and digestible carbohydrates required by man have achieved remarkable commercial success. Such diets are usually formulated as a dry powder for use when mixed with water, either to produce a savory flavour drink resembling a soup, or a sweet flavour drink resembling a milk shake. The diets are designed for use as a sole source of nutrition over a lengthy period of time and their use can lead to significant weight losses.

However, since the diet is consumed in liquid form any desire on the part of the dieter to chew what is consumed as the daily diet is frustrated unless the dieter consumes something other than the formula diet itself. On the other hand, if the dieter does consume something other than the formula diet itself out of a desire to chew something, that can negate the effect of the diet and lead to a smaller than expected weight loss, with consequent disappointment, and/or to the breaking of the diet altogether.

While some meal replacement bars for use in conjunction with very low calorie formula diets have been proposed, such bars have to date proved to be relatively unsatisfactory and generally do not meet objectives of supplying protein without an excess of carbohydrate, due to the requirements of the manufacturing technology. High protein/low carbohydrate baked or compressed products are known. However, known bars made by a confectionery process have a poor taste and provide a substitute for one or more meals in a very low calorie dietary regimen which is much less palatable than the liquid formula diet itself.

In order to produce a confectionery meal replacement bar for use in conjunction with a very low calorie formula diet it is necessary to overcome a number of interrelated problems. Firstly, the bar must contain the necessary meal replacement level of protein in the overall diet. While that may vary depending on the form of presentation of the supplement, generally a bar should contain sufficient protein to provide at least about one-fifth and preferably at least about one-third of a day's supply of protein within the confines of the particular dietary regimen chosen. That will usually mean 20 the bar must contain at least 5 grams of protein, and typically from about 10 to about 18 grams of protein, though larger amounts of protein are not necessarily excluded.

Secondly, the bar while having a sweet taste and not exceeding the low energy content requirements of the diet, may at the same time provide a proportion of the other nutrients, say from about one-fifth to about one-third of a day's supply of, for example, carbohydrate, fat, essential fatty acids, vitamins and minerals. This is not obligatory, and will depend on the type of dietary programme which is envisaged. Thus the bar may contain a sufficient proportion of minerals and vitamins to enable it to be used as a meal replacement without detracting from the mineral and/or vitamin levels supplied in the daily diet of which it is a part, in which case the marked taste of any such minerals and/or vitamins must be sufficiently masked.

Lastly, despite the previous requirements imposed, the bar must be palatable, and at the same time sufficiently low in calories so that it is compatible with a very low calorie dietary regime.

U.S. Patent No. 4,900,566 discloses bars which partially overcome the current disadvantages of such dietary bars and can be made by conventional confectionery processes. These bars utilize for the carbohydrate component a mixture of a digestible and an indigestible carbohydrate in suitable forms, thus allowing the creation of a plastic mass that can be shaped or formed by extrusion or rolling and subsequent cutting into a bar shape or other appropriate form. This bar contains an amount of carbohydrate material which is at least equal in weight to the weight of proteinaceous material, and may be up to 10 times the weight of the proteinaceous material, whereby the desired reduction in calorie content is achieved by a greater or a lesser admixture of an indigestible, or poorly digestible non-fibrous carbohydrate; the use of a non-fibrous material in this context reduces the viscosity of the mixture and results in bars with improved organoleptic properties.

However, such a product is imposed with burdensome requirements because it must possess a minimum percentage of indigestible carbohydrate of molecular weight lower than 5000, in order to reduce the calorific content, and remain palatable.

It has now surprisingly been found that the use of certain specific proteinaceous material alone or in combination with others, provide an excellent material for producing a confectionery having a higher proportion of protein than carbohydrate, and that remains chewy and palatable. The use of such proteinaceous material having a dissociation between water absorption properties and other functional characteristics render them suitable for such high protein confectionery bars without any adverse effect on the palatability of the bar. Furthermore, this confectionery product containing a majority of proteins possesses very good organoleptic properties and satisfies the dieter between each meal.

The present invention also provides a confectionery product with higher nutritional quality, and at the same time lower calorific content.

Proteinaceous materials usually used for the production of previous confectionery bars having a protein:carbohydrate weight ratio lower than 1 possess associated functionality such as high water absorption and high emulsification properties. It has been surprisingly found that proteinaceous material having dissociated_functionality such as low water absorption and medium to high emulsification properties are suitable for the production of a confectionery having a protein : carbohydrate relative weight ratio higher than 1.

It has surprisingly been found that certain proteinaceous materials alone or in combination with mixtures of digestible and/or optionally indigestible, or poorly digestible carbohydrates, can be used for the manufacture of such a confectionery product, preferably in the form of a bar, having a highly acceptable texture, and in which the amount of protein exceeds the total amount of carbohydrate.

Such products can provide the chewy texture required by the dieter, and are otherwise organoleptically acceptable, providing the necessary level of proteinaceous material without an excessive intake of carbohydrate. The formulations also surprisingly aid in masking the taste of any minerals and/or trace elements which are optionally present.

According to a first aspect of the invention, we provide a low calorie confectionery comprising:

(a) proteinaceous material having low water absorption properties and medium to high emulsification properties;
(b) carbohydrate material selected from the group consisting of: digestible carbohydrate, indigestible carbohydrate, and a mixture thereof,

wherein said proteinaceous material and said carbohydrate material are present in a relative weight ratio of from 1:0 to 1:0.999.

We provide, according to a second aspect of the invention, a confectionery comprising:

(a) proteinaceous material having a water absorption property of less than 2.5 grams of water per gram of protein at pH 5.5 and medium to high emulsifying capacity; and
(b) carbohydrate material selected from the group consisting of digestible carbohydrate, indigestible carbohydrate and a mixture thereof;

wherein said proteinaceous material and said carbohydrate material are both present in said confectionery in a protein : carbohydrate relative weight ratio higher than 1, and wherein said proteinaceous material comprises a filler protein and a binding protein.

There is provided, according to a third aspect of the invention, use of a confectionery for inducing or maintaining weight loss, said confectionery comprising:

(a) proteinaceous material having a water absorption property of less than 2.5 grams of water per gram of protein at pH 5.5 and medium to high emulsifying capacity; and
(b) carbohydrate material selected from the group consisting of digestible carbohydrate, indigestible carbohydrate and a mixture thereof;

wherein said proteinaceous material and said carbohydrate material are both present in said confectionery in a protein : carbohydrate relative weight ratio higher than 1, and wherein said proteinaceous material is a filler protein and a binding protein.

The confectionery is used to increase muscle mass, according to a fourth aspect of the invention.

According to a fifth aspect of the invention, there is provided a method of inducing or maintaining weight loss, the method comprising ingestion of a confectionery according to any of the previous aspects of the invention.

We provide, according to a sixth aspect of the invention, a method of increasing muscle mass, the method comprising ingestion of a confectionery according to any of the previous aspects of the invention.

A preferred embodiment comprises confectionery comprising a proteinaceous material and a carbohydrate material in a relative weight ratio higher than 1 (from 1:0 to about 1:0.999). The bar is very paltable and chewy and has good organoleptic properties. It may be coated (enrobed) or not as desired. The product provides a meal replacement for very low calorie diets, diet supplements or protein supplements, and may optionally comprise a carbohydrate material of low digestibility or indigestible nature.

In a preferred embodiment we describe a solid substitute for one or more meals in a very low calorie dietary regimen, which is at least as palatable as the various formula diet products or the conventional foods used, and which has a chewy texture.

In another preferred embodiment we describe a palatable confectionery product which is sufficiently low in calories so that it is compatible with any very low calorie dietary regime.

In another preferred embodiment we describe a confectionery product as a bar containing a relatively high proportion of protein and having a good, chewy, yet open texture, with good organoleptic characteristics.

In another preferred embodiment we describe a confectionery bar which can be used as a vehicle for other special ingredients of a dietary, nutritional or pharmaceutical nature, without imposing an undue burden in terms of calorie content which might impede the use of the bar for such purposes.

Preferably, the confectionery in the form of a homogenous confectionery bar comprising: (a) proteinaceous material having low water absorption properties, preferably less than 2.5 grams of water per gram of protein at pH 5.5, which approximately corresponds to a water absorption of less than 180% as measured by the Farinograph method, and medium to high emulsification capacity which corresponds to at least 10 ml of oil per 100 mg of protein; and (b) carbohydrate material selected from the group consisting of: digestible carbohydrate, poorly digestible carbohydrate, indigestible carbohydrate, and mixtures thereof, wherein the proteinaceous material and the carbohydrate material are present in a relative weight ratio of from about 1:0 to about 1:0.999.

In a preferred embodiment, we describe a homogenous low calorie confectionery bar which is sufficiently soft to permit mastication, said bar comprising: (a) proteinaceous material having a water absorption property of less than 2.5 grams of water per gram of protein at pH 5.5 and medium to high emulsifying capacity; and (b) carbohydrate material selected from the group consisting of digestible carbohydrate, indigestible carbohydrate and a mixture thereof; wherein said bar is produced by cold extrusion; and wherein said proteinaceous material and said carbohydrate material are both present in said bar in a protein : carbohydrate relative weight ratio higher than 1, and wherein said proteinaceous material comprises a filler protein and a binding protein.

In another preferred embodiment, we describe use of a homogenous low calorie confectionery bar which is sufficiently soft to permit mastication for inducing or maintaining weight loss in a human. Furthermore, in another preferred embodiment, we describe the use of a homogenous low calorie confectionery bar which is sufficiently soft to permit mastication for increasing muscle mass in a human.

Within the present invention, the term "smooth" is synonymous with the term "homogenous" with the proviso that neither term precludes the addition of solid particulate material.

Generally, the proteinaceous material used for the present invention comprise a mixture of "binding" proteins and "filler" proteins but some of them may also be used alone. In a preferred embodiment of the invention, whatever protein or blend of proteins is used, it should have low water absorption yet still be capable of binding the ingredients to give a plastic extrudable mass. In practice, this translates to a dissociation between water absorption and the other functional properties of the proteinaceous material or protein blend. The preferable factors are thus:

1) Water absorption of preferably 2.5 grams of water per gram of protein at pH 5.5, which approximately corresponds to a water absorption of less than 180% as measured by the Farinograph method;

2) Emulsification capacity better than would be expected from the low water absorption, thus medium to high which corresponds to at least 10 ml of oil per 100 mg of protein; and

3) Viscosity is not critical, but low to medium viscosity is preferred, which corresponds to viscosities of less than 1200 cps, and preferably less than 600 cps, as measured by a viscometer.

The "binding" protein may be selected from the group consisting of: gelatin, hydrolyzed gelatin, soy protein isolates, whey protein, whole milk protein, pea protein, egg albumen, and wheat gluten.

Each binding protein used herein should possess low water absorption, and medium to high emulsification properties.

The "filler" protein is selected from the group consisting of: gelatin, hydrolyzed gelatin, calcium caseinates, soy proteins, whey protein, pea protein, wheat gluten, and egg albumen.

Properties that the filler proteins preferably possess are: low functionality in general, with in particular low water absorption and low viscosity.

Although in general each of these proteins may be used alone for the production of such a confectionery bar it is preferred to use them in combination, particularly, the preferred ratios used ranges between 75:25 and 25:75 (filler to binder). The most preferred ratio is 54 parts of filler protein for 46 parts of binder. The carbohydrate material comprised in such a bar may optionally comprise indigestible carbohydrate or poorly digestible carbohydrate having a molecular weight lower or equal to 18,000, such as, for example, polydextrose.

Additional preferred features and advantages of the invention will be set forth in the description which follows, and in part, will be obvious from the description, or may be learned by practice of the invention. The features and advantages of the invention may be realized and obtained by means of the instrumentalities and combination particularly pointed out in the appended claims.

The accompanying description illustrates presently preferred embodiments of the invention, and, together with the general description given above serve to explain the principles of the invention.

The confectionery, preferably in the shape of a bar, provides high amounts of proteins, and also provides optional vitamins, minerals and digestible carbohydrates. Therefore the confectionery bars meet increasing protein requirements as caloric intake falls, and prevent decreases in resting metabolic rate that often accompanies low calorie diets, and therefore, the high protein bars have utility in weight loss programs, and increasing muscle mass. Accordingly, a preferred embodiment provides use of a confectionery bar for inducing or maintaining weight loss, preferably in a human. In another preferred embodiment, we describe the use of the confectionert for increasing muscle mass, preferably in a human.

For confectionery purposes, and as desired or convenient, manufacturers often produce and package bars in packs of two or more bars. Thus, the product is hereby defined as "a confectionery bar" whether or not one serving may consist of more than one bar.

The confectionery, preferably confectionery bars, which may or may not be enrobed with chocolate, yoghurt, peanut, carob or other type of coating material, in which the amount of proteinaceous material exceeds the amount of carbohydrate material. The carbohydrate material may consist of digestible carbohydrates alone, or mixtures of digestible carbohydrates with poorly digestible (or non-digestible) carbohydrates, or of poorly digestible carbohydrates alone. The carbohydrate material may be added as a solid, dry material, but is generally used as a concentrated solution.

The proteinaceous materials may be binding proteins, filler proteins, or mixtures thereof.

The binding proteins may be any protein which has low absorption properties yet will emulsify and can create a matrix on hydration. Suitable binding proteins include, but are not limited to: gelatin; hydrolyzed gelatin; soy protein isolate ( for example, as sold under the trademarks PP-710, PP-670, ARDEX-R, and ARDEX D-HD) functional whey protein; functional whole milk protein; pea protein (for example, as sold under the trademark WOODSTONE GOLD); partially denatured egg albumen; and partially devitalized wheat gluten.

Preferably, the binding proteins have low water absorption, and medium to high emulsification properties. In particular, the preferred properties of the binding proteins, from which a person skilled in the art can identify other binding proteins are:

1) Low water absorption, preferably less than 2.5 grams of water per gram protein at pH 5.5, which approximately corresponds to a water absorption of less than 180% as measured by the Farinograph method;

2) Medium to high emulsification properties which corresponds to at least 10 ml of oil per 100 mg of protein;

3) Low to medium viscosity which corresponds to viscosities of less than 1200 cps, and preferably less than 600 cps, as measured by a viscometer.

The filler proteins may be any protein which has been denatured by processing to a low level of functional activity. Suitable filler proteins include, but are not limited to: gelatin, hydrolyzed gelatin, calcium caseinate (for example, as sold under the trademarks FARBEST 290, FARBEST 270, FARBEST 200, and FARBEST 312), soy protein isolate (for example, as sold under the trademarks PP-860 and ARDEX-R), denatured whey protein, pea protein (for example, as sold under the trademark WOODSTONE GOLD), devitalized wheat gluten, and denatured egg albumen.

Any of the listed trademarks are exemplary of preferred embodiments of the disclosed proteins, and within the confectionery bar industry a tradename or trademark is considered to provide a concise and definitive description of a particular protein. In any event, the characteristics of suitable binding and filler proteins are adequately described in the specification and the listed trademarks are merely exemplary.

In addition to the above fillers, caseinate that have been heat-treated before drum drying may also be used.

Generally, the preferred properties of the fillers, from which a person skilled in the art should be able to identify other fillers that could be used are low functionality in general, in particular low water absorption and low viscosity. The functionality describes the overall profile of physiochemical properties of a protein, which comprises a composite of individual properties.

In a preferred embodiment, filler proteins have a water absorption of less than 2.5 grams of water per gram protein at pH 5.5, which approximately corresponds to a water absorption of less than 180% as measured by the Farinograph method, and a low to medium viscosity which corresponds to viscosities of less than 1200 cps, and preferably less than 600 cps, as measured by a viscometer.

In another preferred embodiment, less functional or partially or totally denatured proteins may be used as filler proteins. These proteins demonstrate a water absorption by the Farinograph method of less than 180% when tested alone, and demonstrate no increase in water absorption when admixed with binding proteins.

Gelatins and hydrolyzed gelatins are water-soluble proteins derived from collagen, and therefore include hydrolyzed collagen. Gelatins may be considered both binding or filler proteins depending on those physicochemical properties derived from the degree of hydrolysis. Preferably, a greater degree of hydrolysis generally results in a protein with little binding effect.

Although not disclosed here, other proteins may be later found to possess the relevant properties and be suitable for the production of the confectionery. Such proteins are therefore well within the scope of the invention. By way of example, preferred properties of a protein or protein mixture may be determined by experiment as follows:

Water Absorption

Water absorption may be determined in a Farinograph under standard conditions. These conditions consist of making a mixture of 270 grams of wheat flour with 30 grams of the protein or protein mixture to be tested, placing this in the chamber of the Farinoaraph and mixing under low shear with gradual addition of water until the torque required to maintain the speed of mixing reaches a predetermined level. The amount of water added to reach this torque level is then determined.

Under such standard conditions, water absorption of proteins which are conventionally used to manufacture nutritional bars, and which are recommended by manufacturers for this purpose, are in excess of 200%, and in the case of proteins most frequently used are about 250% - 280%. In a preferred embodiment protein water absorption is less than 2.5 grams of water per gram of protein at pH 5.5, which approximately corresponds to a water absorption of less than 180%.

Viscosity

Standard conditions for measuring viscosity are defined as a 15% solution of the protein or protein mixture in water at 25°C, prepared and measured in a viscometer (such as sold under the trademark Brookfield®), at a shear rate of 10 sec$^{-1}$.

Under such standard condition, viscosities of proteins which are conventionally used to manufacture nutritional bars often exceed 1200 cps at concentrations of 10% 12%, and may be unmeasurable at concentrations of 15%. In a preferred embodiment, protein viscosities are less than 1200 cps, and preferably have viscosities of less than 600 cps.

Emulsifying Capacity

Standard conditions for measuring emulsifying capacity are defined as the continuous addition of soy bean oil to 100 ml of a 0 25% dispersion of the protein or protein mixture in a food blender. The amount of oil added at the time the emulsion breaks is recorded and the result is expressed as ml of oil per 100 mg protein.

Under the same conditions, proteins conventionally used to manufacture nutrition bars will have an emulsion capacity that tends to be higher than this value. In a preferred embodiment proteins have an emulsion capability of 10 ml or more oil per 100 mg protein.

Solubility

The proteins are preferably soluble, though the degree of solubility is not critical. In a preferred embodiment, those proteins that tend to have higher solubilities are included, as determined by the standard Nitrogen Solubility Index (NSI) method.

Gel Formation

Gel formation is not a prerequisite for the proteins of use here.

Thus, proteins and mixtures thereof preferably have low water absorption, low viscosity, possess medium to high emulsification capacity, and are preferably soluble. Such attributes, in the case of isolated legume proteins, generally indicate a high degree of dissociation between functional properties. However, also included are those embodiments wherein at least one of the proteins used in a mixture of proteins possesses the preferred properties and is present in sufficient amount in combination with other proteins which may be insoluble and may have few of the preferred properties described herein.

Effectively, any of the binding proteins can be used with any of the filler proteins, but the optimal ratio will change for each combination, with the limiting values of 100% of binding protein on the one hand and, 100% filler protein on the other hand (for the caseinates and soy proteins as filler proteins only).

The ultimate choice may depend on many factors including price, flavour and availability. For example, caseinates may be superior to soy protein but may possess a flavour which some people do not like. The same applies to pea protein and soy protein. As far as price is concerned, egg albumen and whey protein are 4 to 5 times as expensive as soy, and may be used if price was not a consideration. Wheat gluten is cheap, but has low nutritional value.

In a preferred embodiment, soy protein isolates may be used with caseinates in a ratio of 54:46, however, the ratio can vary as widely as from 65:35 to 40:60.

The carbohydrate material used may be a sugar polymer such as, for example, polydextrose in a 70% solution although sorbitol and xylitol may also be used in a 70% solution. This polymer is only partially metabolised in the human body. Most of the product passes through the body unabsorbed, and the principal utilisation pathway for the remainder involves metabolism by intestinal micro-organisms to form carbon dioxide and volatile fatty acids. Those acids can then be absorbed and utilised as an energy source so that in man the energy provided by polydextrose is 1 Kcal per gram. However, digestible carbohydrates may also be used in the production of the confectionery such as, for example, honey, glucose-fructose syrup, sucrose, cocoa butter, high-fructose corn syrup, peanut butter, nuts, and mixtures thereof.

The optional coating may be any conventional coating product freely available in the art, or may be a custom-manufactured product containing greater amounts of protein than is usual, (preferably 15% or more of the weight of the coating may consist of protein).

In another preferred embodiment, we describe use of novel compositions for preparing a medicament or confectionery bar for increasing muscle mass or inducing or maintaining weight loss, wherein the composition comprises: (a) proteinaceous material having a water absorption property of less than 2.5 grams of water per gram of protein at pH 5.5 and medium to high emulsifying capacity; and (b) carbohydrate material selected from the group consisting of digestible carbohydrate, indigestible carbohydrate and a mixture thereof; wherein said bar is produced by cold extrusion; and wherein said proteinaceous material and said carbohydrate material are both present in said bar in a protein : carbohydrate relative weight ratio higher than 1, and wherein said proteinaceous material comprises a filler protein and a binding protein.

The confectionery may be of any shape and may be formed by any means. Preferably, the confectionery is in the shape of a bar.

The bar may be prepared by cold forming or cold extrusion. Within the context of the instant invention, cold forming is synonymous with cold extrusion. These processes typically use a mix comprising of a blend of powders capable of absorbing water or moisture, and concentrated solutions of various other ingredients, such as carbohydrates. The powders absorb water from the concentrated solutions and the individual ingredients in the powder part of the mixture then hydrate. The hydrated molecules, which are generally proteins or complex carbohydrates such as starches or water-absorbing dietary fibres, then exhibit affinity through the formation of weak intermolecular forces which can be electrostatic in nature, and can include bonds such as hydrogen bonds as well as van der Waals forces. The carbohydrate or other constituents of the original liquid remains entrained in the complex of hydrated molecules, as may other materials such as fats are added to the mixture. A measure of the emulsifying power of the hydrated molecules may be taken to see how much fat or oil can be entrained or coated with protein, since the hydrophobic nature of fat or oil can make demands on the strength of interaction between the hydrated molecules. Alternatively, the hydrateable materials, carbohydrate, and other constituents may be mixed, and then water is added, although this may result in a mass that lacks adequate integrity and cohesion and is not suitable for cold forming.

In a preferred embodiment, the process results in a plastic mass which can then be shaped by cold forming or low-temperature extrusion, without further physical or chemical changes. In this process, the plastic mass is forced at relatively low pressure through a die which confers a desired shape and the resultant extrudate is then cut off at an appropriate length to give products of a desired weight.

The mass may, for example, be forced through a die of small cross-section to form a ribbon, which is then cut by a guillotine type cutter. Alternatively, the mass may be forced through a die of large cross-section and then cut at die level into slices by an oscillating knife or wire. It may also be extruded as a sheet, which is then cut with a stamp type cutter into shapes that are appropriate, such as a cookie type cutter. Finally, the mass may also be forced into chambers on a rotary die equipped with an eccentric cam that forces the formed material out of a chamber at a certain point in the rotation of the cylindrical die. After shaping, the formed product is then moved by a transfer belt or other type of material conveyor.

Preferably, the plastic is relatively soft and sufficiently elastic to recover from minor deformations, and posses sufficient integrity to maintain its form after shaping . In general, the process of cold forming also referred to as cold extrusion, and preferably has the following characteristics:

1) Low temperature. Generally the process occurs at ambient temperature of 60°F to 85°F. Preferably, it may be desirable to cool the extrusion equipment down to lower temperatures. Alternatively, when manufacturing true candy products based on sucrose, or savoury products based on hydrolysed proteins, the extruder may be heated.

2) Low pressure. The pressure is required only to force the mass through the die, and preferably, the pressure in the die will remain below 75 lbs/inch.

3) Physical properties of the mass fed to the extruder to give the final form to the product.

4) Absence of heat- or pressure-mediated chemical or physical reactions or changes.

Alternatively, the process of cooking extrusion is characterized by high temperature, high pressure and reliance on physical and chemical reactions in the product to give the product its finished form, for example, the gelatinization of starch or texturizing of the protein in the mix. Cooking extruders may run at temperatures as high as 400°F or higher, and pressures of several thousand lbs/inch'.

The confectionery may also be produced by conventional confectionery processes as defined in the following examples.

The present invention, thus generally described, will be understood more readily by reference to the following examples, which are provided by way of illustration and are not intended to be limiting of the present invention.

### Example 1

A liquid blend is prepared containing polydextrose (70% solids), honey, glucose-fructose syrup (77% solids), liquid lecithin, soya bean oil and vanilla flavour. This is maintained at 40 C - 45 C.

| INGREDIENT: | PER 1000 KG: | NUTRITIONAL PROFILE per G: | |
|---|---|---|---|
| Polydextrose 70% | 453.2 kg | | |
| | | Protein: | 0.000 |
| Honey | 216.7 kg | | |
| | | * Fat: | 0.154 |
| Glucose-fructose | 164.5 kg | | |
| | | Carbohydrate: | 0.307 |
| Soya bean oil | 87.7 kg | | |
| | | Polydextrose: | 0.317 |
| Lecithin, liquid | 66.0 kg | | |
| | | Kilocalories: | 2.860 |
| Vanilla flavour | 1.08 kg | | |
| citric acid | 1.00 kg | | |

* Lecithin calculated at 8.0 kilocalories per gram.

A hard chocolate coating is then prepared by blending calcium caseinate into a proprietary dark chocolate coating, #453. A small amount of hydrogenated vegetable oil is also incorporated into the blend, to keep viscosity at an acceptable level. The formulation is prepared according to the prescription below:

| INGREDIENT: | PER 1000 KG: | NUTRITIONAL PROFILE per G: | |
|---|---|---|---|
| Dark coating 453 | 700.00 kg | Protein | 0.210 |
| Caseinate (ALANATE 312) | 200.00 kg | (*)Fat | 0.368 |
| Coating fat | 90.00 kg | | |
| | | Carbohydrate | 0.389 |
| Lecithin, liquid | 10.00 kg | Kilocalories | 5.539 |

(*) Lecithin calculated at 8.0 kilocalories per gram.

The main mix for each bar formulation ["CORE" mix] is prepared to specifications indicated below. The ingredients are thoroughly mixed in a single-shaft ribbon blender (10 minutes), after which half the liquid mix was blended in, followed by the flavours, and the whole mixed for a further 5 minutes. The remaining amount of warm liquid mix is then added, followed by the water, and the entire mixture further blended to a homogenous plastic mass. It is then extruded through a 16" low-temperature former manufactured by Werner-Lehara, and the resultant ribbon is cut into oblong bars of weights specified. Coating (as specified) is then applied to each bar at about 45 C. Coated bars are cooled, individually sealed into wrappers, and packed in boxes.

| HONEY-PEANUT BAR: | Weight per mix in kg: | Weight per mix in lbs: |
|---|---|---|
| Ingredient: | | |
| Soy Protein (PP 710) | 95.45 | 210.00 |
| Caseinate (FARBEST 290) | 79.54 | 175.00 |
| Peanut flour(*) | 11.82 | 26.00 |
| Peanut flavour | 1.36 | 3.00 |
| Buttery caramel | 2.72 | 6.00 |
| Liquid mix | 186.82 | 411.00 |
| Water | 10.45 | 23.00 |

(*) Partially defatted; toasted.

(continued)

| HONEY-PEANUT BAR: | Weight per mix in kg: | Weight per mix in lbs: |
|---|---|---|
| Ingredient: | | |
| TOTAL BATCH WEIGHT: | +/-387.16 | +/-854.00 |
| Coating | +/-68.00 | +/-150.00 |

CORE WEIGHT: 32.5g, range 32.0 - 33.5g
FINISHED BAR: 38.3g +/- 3%

Finished bars contain 15 grams protein and 12.7 grams carbohydrate, of which 7.5 grams was fully available and 4.7 grams was the poorly digestible polydextrose.

## Example 2

An uncoated bar is prepared following the mixing and extrusion procedures given in Example 1, except that the bar is not enrobed with a coating. Bars are extruded at a weight of 37.5 grams, giving bars containing 15 grams of protein and 11.4 grams of carbohydrate, of which 5.7 grams is fully available and 5.7 grams is the poorly digestible polydextrose.

## Example 3

The bar of Example 2 is coated with 6 grams of an enrobing mixture prepared from 55 grams powdered sugar ("Icing Sugar"), 20 grams calcium caseinate (FARBEST 20B) and 25 grams water, giving a bar of 43.5 grams weight with 16.1 grams protein and 14.7 grams carbohydrate, of which 5.7 grams is the poorly digestible polydextrose.

## Example 4

A coated bar is prepared following the mixing and extrusion procedures given in Example 1, except that the core of the bar is prepared to the following formulation:

| CHOCOLATE-ORANGE BAR | Weight per mix in kg: | Weight per mix in lbs: |
|---|---|---|
| Ingredient: | | |
| Soy Protein PP 710* | 95.45 | 210.00 |
| Caseinate (FARBEST 290) | 79.54 | 175.00 |
| Cocoa powder | 11.82 | 26.00 |
| Chocolate flavour | 2.27 | 5.00 |
| Orange oil | 0.68 | 1.50 |
| Solution | 186.82 | 411.00 |
| Water (up to) | 10.45 | 23.00 |
| TOTAL BATCH WEIGHT: | +/-387.03 | +/-851.50 |
| Coating | +/-68.22 | +/-150.00 |

CORE WEIGHT: 33.0g, range 32.0 - 34.0g
FINISHED BAR: 38.98 +/- 3

Finished bars contain 15 grams protein and 12.7 grams carbohydrate, of which 7.5 grams is fully available and 4.7 grams is the poorly digestible polydextrose.

## Example 5

An uncoated bar is prepared following the mixing and extrusion procedures given in Example 1 but using the formulation given in Example 4. Bars are extruded at a weight of 38 grams, giving bars containing 15 grams of protein and 11.4 grams of carbohydrate, of which 5.7 grams is fully available and 5.7 grams is the poorly digestible polydextrose.

## Example 6

The bar of Example 5 is coated with 7 grams of an enrobing mixture prepared from 55 grams powdered sugar ("Icing Sugar"), 20 grams calcium caseinate (FARBEST 200) and 25 grams water, giving a bar of 44 grams weight with 16.3 grams protein and 15.2 grams carbohydrate, of which 5.7 grams is the poorly digestible polydextrose.

## Example 7

The formulation of Example 1 is mixed in a double-shaft ribbon blender and extruded through a Werner-Lehara 32" extruder equipped with a wire cut attachment. Large dies of cross-section 1½" x 2½" are used, and slices corresponding to a weight of 32.5 grams are cut off parallel to the die face. These slices are then enrobed in a dark high protein chocolate compound coating made from sucrose, hydrogenated vegetable oil, calcium caseinate, cocoa powder, lecithin, flavour, emulsifiers and stabilizers, containing 21% protein, 36% fat and 40% carbohydrate.
Finished bars are nutritionally identical with those of Example 1, containing 15 grams protein and 12.7 grams carbohydrate, of which 7.5 grams is fully available and 4.7 5 grams is the poorly digestible polydextrose.

## Example 8

A formulation identical to that of Example 4 is mixed in the fashion described in Example 7, extruded in a 32" Werner-Lehara extruder with wire-cut attachment, and enrobed with the coating described in Example 7.
Finished bars are nutritionally identical with those of Example 4,containing 15 grams protein and 12.7 grams carbohydrate, of which 7.5 grams is fully available and 4.7 grams is the poorly digestible polydextrose.

## Example 9

A blend of 54 parts by weight soy protein isolate (PP-710, Protein Technologies International) and 46 parts by weight calcium caseinate (FARBEST 290, Farbest Brands Inc.) is prepared in a ribbon blender and labelled Protein Blend "A".
Dry ingredients corresponding to the mix prescriptions given below are placed in the bowl of a dough mixer manufactured by Artofex and mixed gently until completely homogenous (5 minutes). Aqueous liquids (high fructose corn syrup, honey, polydextrose etcetera) are then added, mixed in (2 minutes) and followed by the oil and lecithin. After further gentle mixing, flavours are added, the whole mixed for a further 2 or 3 minutes, and the resultant mix tested for consistency. When satisfactory, it is extruded through a Werner-Lehara 16" continuous roll extruder equipped with a 1.25" x 0.5" die, 8 across. The resultant ribbons are cut with a pneumatic knife to an appropriate length for the indicated weight, and subsequently enrobed in a high protein coating of the composition indicated in Example 7.

| HONEY-PEANUT BAR | Weight per mix: | | |
|---|---|---|---|
| Ingredient: | kgs | lbs | |
| Protein Blend "A" | 29.54 | 65.13 | |
| Polydextrose 70% | 15.61 | 34.42 | |
| Honey | 7.65 | 16.87 | |
| High fructose syrup | 6.89 | 15.19 | |
| Soya oil | 2.11 | 4.65 | |
| Lecithin | 2.11 | 4.65 | |
| Peanut butter | 2.04 | 4.50 | |
| Water up to | 1.36 | 3.00 | |
| Flavours | 1.15 | 2.54 | |
| Glycerol | 0.45 | 1.00 | |
| Potassium sorbate | 0.07 | 0.15 | |
| Citric acid | 0.03 | 0.07 | |
| TOTAL BATCH WEIGHT: | +/-69.01 | | +/-152.14 |
| Coating (Example 7) | +/-12.18 | | +/-26.85 |

CORE WEIGHT:    35.0g, range 34.5 - 35.5g
FINISHED BAR:   41.0g +/- 3%

The nutritional analysis of the bars is calculated by the Atwater method, based on the reconciliation below:

| Constituent: | Weight: | Factor: | Kilocalories: |
|---|---|---|---|
| Protein, casein: | 7.46 @4.27 | 31.85 | |
| Protein, soy: | 7.13 @3.47 | 24.74 | |
| Protein, peanut: | 0.28 @3.47 | 0.97 | |
| Protein, cocoa: | 0.13 @1.83 | 0.24 | |
| Fat, PKO: | 2.10 @8.84 | 18.56 | |
| Lecithin: | 1.13 @7.00 | 7.91 | |
| Soya oil: | 1.07 @8.84 | 9.46 | |
| Peanut oil: | 0.50 @8.37 | 4.19 | |
| Fat, cocoa: | 0.06 @8.37 | 0.50 | |
| Fructose: | 2.96 @3.68 | 10.89 | |
| Glucose: | 2.43 @3.68 | 8.94 | |
| Sucrose/others: | 2.40 @3.87 | 9.29 | |
| CHO, peanut: | 0.09 @4.07 | 0.37 | |
| CHO, cocoa: | 0.07 @1.33 | 0.09 | |
| Polydextrose: | 5.80 @1.00 | 5.80 (+ fibre) | |
| | | 133.80 | |

The weights of protein and carbohydrate are calculated:

| Protein, casein | 7.46 | Fructose | 2.96 |
|---|---|---|---|
| Protein, soy | 7.13 | Glucose | 2.43 |
| Protein, peanut | 0.28 | Sucrose/others | 2.40 |
| Protein, cocoa | 0.13 | CHO, peanut | 0.09 |
| | | CHO, cocoa | 0.07 |
| | | Polydextrose | 5.55 |
| | 15.00 | | 13.50 |

The bars thus contain 15.00 grams of protein and 13.50 grams total carbohydrate, of which 5.55 grams is the poorly digestible carbohydrate, polydextrose.
The overall nutritional profile of the bars is:

| HONEY-PEANUT BAR | Weight per bar (g) | Protein | Fat | CHO | Fibre |
|---|---|---|---|---|---|
| Ingredient: | | --------------------per bar-------------------- | | | |
| Calcium caseinate | 8.285 | 7.46 | | | |
| Soy Protein Isolate | 8.098 | 7.13 | | | |
| Polydextrose, 70% 5.55 | 7.925 | | | | |
| Honey | 3.884 | | | 3.09 | |
| Glucose-fructose 77% | 3.498 | | | 2.69 | |
| Hydrogenated PKO | 2.098 | | 2.10 | | |
| Sucrose | 2.014 | | | 2.01 | |
| Lecithin | 1.133 | | 1.07 | | |
| Soya oil | 1.01 | | 1.07 | | |
| Peanut butter | 1.036 | 0.28 | 0.50 | 0.09 | 0.07 |
| Water | 0.690 | | | | |
| Cocoa powder | 0.555 | 0.13 | 0.06 | 0.07 | 0.18 |

(continued)

| HONEY-PEANUT BAR | Weight per bar (g) | Protein | Fat | CHO | Fibre |
|---|---|---|---|---|---|
| Ingredient: | | --------------------per bar-------------------- | | | |
| Flavours | 0.615 | | | | |
| Glycerol | 0.228 | | | | |
| Potassium sorbate | 0.041 | | | | |
| Citric acid | 0.015 | | | | |
| Mono/diglycerides | 0.012 | | 0.01 | | |
| Sorbitan monost'e | 0.006 | | | | |
| Polysorbate 60 | 0.006 | | | | |
| Nutritional analysis | 41.210 | 15.00 | 4.81 | 7.95 | 5.80 |
| PER 100 GRAMS: | | 36.40 | 11.67 | 19.29 | 14.07 |

## Example 10

The procedures of Example 9 are followed except that the formulation mixed, extruded and enrobed with a white high protein yoghurt coating made from sucrose, hydrogenated vegetable oil, calcium caseinate, whey and yoghurt powders, lecithin and flavour, containing 21% protein, 36% fat and 40% carbohydrate.

| Constituent: | Weight: | Factor: | Kcal: |
|---|---|---|---|
| Protein, casein | 7.46 | @4.27 | 31.85 |
| Protein, soy | 7.13 | @3.47 | 24.74 |
| Protein, cocoa | 0.29 | @1.83 | 0.53 |
| Fat, PKO | 2.10 | @8.84 | 18.56 |
| Lecithin | 1.13 | @7.00 | 7.91 |
| Soya oil | 1.07 | @8.84 | 9.46 |
| Fat, cocoa | 0.26 | @8.37 | 2.18 |
| Fat, butter | 0.22 | @8.79 | 1.93 |
| Fructose | 2.99 | @3.68 | 11.00 |
| Sucrose/other | 2.40 | @3.87 | 9.29 |
| Glucose | 2.45 | @3.68 | 9.02 |
| CHO, cocoa | 0.16 | @1.33 | 0.21 |
| Polydextrose | 6.00 | @1.00 | 6.00 (+ fibre) |
| | | | 132.68 |

The weights of protein and carbohydrate are calculated:

| Protein, casein | 7.46 | Fructose | 2.99 |
|---|---|---|---|
| Protein, soy | 7.13 | Sucrose/others | 2.40 |
| Protein, cocoa | 0.29 | Glucose | 2.45 |
| | | CHO, cocoa | 0.16 |
| | | Polydextrose | 5.55 |
| | 14.88 | | 13.55 |

The bars thus contain 14.88 grams of protein and 13.55 grams total carbohydrate, of which 5.55 grams is the poorly digestible carbohydrate, polydextrose.
The overall nutritional profile of the bars is:

| CHOCOLATE-ORANGE BAR | Weight per bar (g) | Protein | Fat | CHO | Fibre |
|---|---|---|---|---|---|
| Ingredient: | | -----per bar--------------- | | | |
| Calcium caseinate | 8.285 | 7.46 | | | |

(continued)

| CHOCOLATE-ORANGE BAR | Weight per bar (g) | Protein | Fat | CHO | Fibre |
|---|---|---|---|---|---|
| Soy Protein Isolate | 8.098 | 7.13 | | | |
| Polydextrose 70% | 7.925 | | | | 5.55 |
| Honey | 3.884 | | | 3.09 | |
| Glucose-fructose 77% | 3.569 | | | 2.74 | |
| Hydrogenated PKO | 2.098 | | 2.10 | | |
| Sucrose | 2.014 | | | 2.01 | |
| Cocoa powder | 1.380 | 0.29 | 0.26 | 0.16 | |
| 0.45 | | | | | |
| Lecithin | 1.133 | | 1.07 | | |
| Soya oil | 1.071 | | 1.07 | | |
| Water | 0.690 | | | | |
| Flavours | 0.575 | | | | |
| Butter | 0.268 | | 0.22 | | |
| Glycerol | 0.228 | | | | |
| Potassium sorbate | 0.041 | | | | |
| Citric acid | 0.015 | | | | |
| Mono/diglycerides | 0.012 | | 0.01 | | |
| Sorbitan monost'e | 0.006 | | | | |
| Polvsorbate 60 | 0.006 | | | | |
| Nutritional analysis | 41.298 | 14.88 | 4.73 | 8.00 | 6.00 |
| PER 100 GRAMS: | | 36.03 | 11.45 | 19.37 | 14.53 |

## Example 11

The procedures of Example 9 are followed except that the formulation mixed, extruded and enrobed has the composition shown below, and a white, yoghurt-based coating is used for the enrobing of the bars.

| HONEY-ALMOND BAR | Weight per mix: | |
|---|---|---|
| Ingredient: | kgs | lbs |
| Protein Blend "A" | 30.75 | 67.80 |
| Honey | 16.07 | 35.43 |
| Polydextrose 70% | 15.50 | 34.17 |
| Almond butter | 3.09 | 6.82 |
| Lecithin | 2.20 | 4.84 |
| Water up to | 1.25 | 2.75 |
| Glycerol | 0.45 | 1.00 |
| High fructose syrup | 0.45 | 1.00 |
| Flavours | 0.95 | 2.09 |
| Potassium sorbate | 0.07 | 0.15 |
| Citric acid | 0.03 | 0.07 |
| TOTAL BATCH WEIGHT: | +/-70.81 | +/-156.12 |
| Coating (see below) | +/-12.50 | +/-27.56 |
| CORE WEIGHT: | 35.0g, range | 34,.5 - |
| 35.5g | | |
| FINISHED BAR: | 41.0g +/- 3% | |

The bar is coated with a white high protein yoghurt coating made from sucrose, hydrogenated vegetable oil, calcium caseinate, whey and yoghurt powders, lecithin and flavour, containing 21% protein, 36% fat and 40% carbohydrate.

The Caloric value of the bar is calculated using the Atwater method.

| CALORIC VALUE, HONEY-ALMOND BAR (using Atwater factors) | | | |
|---|---|---|---|
| Constituent: | Weight: | Factor: | Kcal: |
| Protein, casein | 7.47 | @4.27 | 31.90 |
| Protein, soy | 7.23 | @3.47 | 25.09 |
| Protein, almond | 0.27 | @3.47 | 0.94 |
| Protein, whey | 0.07 | @4.27 | 0.30 |
| Protein, yoghurt | 0.05 | @4.27 | 0.21 |
| Total Calories from Protein | | | 58.44 |
| Fat, PKO | 2.10 | @8.84 | 18.56 |
| Lecithin | 1.18 | @7.00 | 8.26 |
| Almond oil | 0.82 | @8.37 | 6.86 |
| Sucrose/others | 3.36 | @3.87 | 13.00 |
| Fructose | 3.13 | @3.68 | 11.52 |
| Glucose | 2.57 | @3.68 | 9.46 |
| CHO, whey | 0.40 | @3.87 | 1.55 |
| CHO, almond | 0.14 | @4.07 | 0.57 |
| CHO, yoghurt | 0.06 | @3.87 | 0.23 |
| Polydextrose | 5.52 | @1.00 | 5.52 (+ fibre) |
| | | | 133.97 |

The weights of protein and carbohydrate are calculated:

| Protein, casein | 7.47 | Sucrose/others | 2.90 |
|---|---|---|---|
| Protein, soy | 7.23 | Fructose | 3.13 |
| Protein, almond | 0.27 | Glucose | 2.57 |
| Protein, whey | 0.07 | CHO, whey | 0.40 |
| Protein, yoghurt | 0.05 | CHO, almond | 0.14 |
| | | CHO, yoghurt | 0.06 |
| | | Polydextrose | 5.37 |
| | 15.09 | | 15.03 |

The bars thus contain 15.09 grams of protein and 15.03 grams total carbohydrate, of which 3.37 grams is the poorly digestible carbohydrate, polydextrose.

The overall nutritional profile of the bars is shown in the table which follows.

| HONEY-ALMOND flavoured protein bar of 41 g: | | | | | |
|---|---|---|---|---|---|
| HONEY-ALMOND BAR | Weight per bar (g) | Protein | Fat | CHO | Fibre |
| Ingredient: | | ---------------------per bar----- | | | |
| Calcium caseinate | 8.298 | 7.47 | | | |
| Soy protein isolate | 8.216 | 7.23 | | | |
| Honey | 7.951 | | | 6.33 | |
| Polydextrose 70% | 7.669 | | | | 5.37 |
| Hydrogenated PKO | 2.098 | | 2.10 | | |
| Sucrose | 2.098 | | | 2.10 | |
| Almond butter** | 1.528 | 0.27 | 0.82 | 0.14 | 0.15 |
| Lecithin | 1.181 | | 1.09 | | |
| Water | 0.618 | | | | |
| Whey powder | 0.555 | 0.07 | | 0.40 | |

(continued)

| HONEY-ALMOND flavoured protein bar of 41 g: | | | | | |
|---|---|---|---|---|---|
| HONEY-ALMOND BAR | Weight per bar (g) | Protein | Fat | CHO | Fibre |
| Ingredient: | | ----------------------per bar----- | | | |
| Glucose-fructose 77% | 0.223 | | | 0.17 | |
| Glycerol | 0.223 | | | | |
| Yoghurt solids | 0.123 | 0.05 | | 0.06 | |
| Potassium sorbate ** | 0.041 | | | | |
| Sodium chloride | 0.037 | | | | |
| Colour | 0.025 | | | | |
| Citric acid | 0.015 | | | | |
| Nutritional analysis | 41.399 | 15.09 | 4.01 | 9.20 | 5.52 |
| PER 100 GRAMS | | 36.45 | 9.69 | 22.22 | 13.33 |

## Example 12

A low calorie bar of Honey-Peanut flavour is made to the formulation shown below, following the procedures described in Example 9.

| Honey Peanut BAR | Weight per mix: | |
|---|---|---|
| Ingredients: | kgs | lbs |
| Protein Blend "A" | 29.54 | 65.13 |
| Polydextrose 70% | 29.30 | 64.61 |
| Lecithin | 2.50 | 4.65 |
| Peanut pieces | 2.04 | 4.50 |
| Water up to | 1.36 | 3.00 |
| Flavours | 1.15 | 2.54 |
| Honey | 1.02 | 2.25 |
| Peanut butter | 1.02 | 2.25 |
| Glycerol | 0.45 | 1.00 |
| Aspartame | 0.08 | 0.17 |
| Citric acid | 0.03 | 0.07 |
| TOTAL BATCH WEIGHT: | +/- 68.11 | +/-150.17 |
| Coating (Example 7) | +/- 12.02 | +/- 26.50 |

CORE WEIGHT:     35.0g, range 34.5 - 35.5g
FINISHED BAR:     41.0g +/- 3%

The bars contain 15.00 grams of protein and 13.50 grams total carbohydrate, of which 10.39 grams is the poorly digestible carbohydrate, polydextrose. Energy content is calculated at 105 kilocalories per bar.

## Example 13

A low calorie bar of Honey-Peanut flavour is made to the formulation shown below, following the procedures described in 40 Example 9.

| Honey Peanut BAR | Weight in kg: | Experimental batch: | |
|---|---|---|---|
| Ingredient: | | g/85 g | g/bar |
| Protein Blend "A" | 22.00 | 31.82 | 13.57 |
| Polydextrose, 70% | 28.00 | 40.50 | 17.27 |
| Cellulose | 2.20 | 3.18 | 1.36 |

(continued)

| Honey Peanut BAR | Weight in kg: | Experimental batch: | |
|---|---|---|---|
| Peanut butter | 2.30 | 3.33 | 1.42 |
| Lecithin | 1.90 | 2.75 | 1.17 |
| Honey | 0.80 | 1.16 | 0.49 |
| Flavours | 1.08 | 1.56 | 0.67 |
| Glycerine | 0.34 | 0.49 | 0.21 |
| Aspartame | 0.06 | 0.09 | 0.04 |
| Potassium sorbate | 0.06 | 0.09 | 0.04 |
| Citric acid | 0.02 | 0.03 | 0.01 |
| TOTAL BATCH WEIGHT: | 58.76 | | |
| Coating (Example 7) | 10.36 | | |

CORE WEIGHT:     36.25 grams.
FINISHED BAR:     42.64 grams.

The weights of protein and carbohydrate are calculated per 100 grams of bar:

| Protein, casein | 13.173 | Fructose | 0.414 |
|---|---|---|---|
| Protein, casein | 3.032 | Sucrose/others | 0.549 |
| Protein, soy | 15.464 | CHO, peanut | 0.286 |
| Protein, peanut | 0.866 | CHO, cocoa | 0.145 |
| Protein, cocoa | 0.299 | Glycerine | 0.490 |
| | | Polydextrose | 28.350 |
| | 32.834 | | 30.234 |

Per 100 grams, the bars thus contain 32.83 grams of protein and 30.23 grams total carbohydrate, of which 28.35 grams is the poorly digestible carbohydrate, polydextrose. Size of bar for 14 grams protein: 42.64 grams coated. Calorie count of a 14 gram bar: 99.45 kilocalories.

| CALORIC VALUE, HONEY-PEANUT BAR (per 100 g, using Atwater factors) | | | |
|---|---|---|---|
| Constituent: | Weight: | Factor: | Kilocalories: |
| Protein, casein | 13.173 | @4.27 | 56.249 |
| Protein, casein | 3.032 | @4.27 | 12.947 coating |
| Protein, soy | 15.464 | @3.47 | 53.660 |
| Protein, peanut | 0.866 | @3.47 | 3.005 |
| Protein, cocoa | 0.299 | @1.83 | 0.547 |
| 32.834 (grams protein) | | | |
| Total Calories from Protein: | | 126.408 | |

| Fat, PKO | 5.100 | @8.84 | 45.084 |
|---|---|---|---|
| Lecithin | 2.900 | @7.00 | 20.300 |
| Peanut oil | 0.602 | @8.37 | 5.039 |
| Fat, cocoa | 0.145 | @8.37 | 1.214 |
| Fructose | 0.414 | @3.68 | 1.524 |
| Sucrose/others | 0.549 | @3.87 | 2.125 |

(continued)

| CHO, peanut | 0.286 | @4.07 | 1.164 |
| CHO, cocoa | 0.145 | @1.33 | 0.193 |
| Glycerine | 0.490 | @3.75 | 1.838 |
| Polydextrose | 28.350 | @1.00 | 28.350(+ fibre) |
| Total Calories per 100 grams: | | 233.239 | |

**Example 14**

A bar of Black Forest Cake flavour is made to the formulation shown below, following the procedures described in Example 9.
The bar is enrobed in the coating of Example 7.

| BLACK FOREST BAR Ingredient: | Weight in kg: |
|---|---|
| Protein Blend "A" | 29.54 |
| Polydextrose 70% | 15.62 |
| Fructose syrup 77% | 7.34 |
| Sorbitol 70% | 7.34 |
| Soya oil | 2.12 |
| Lecithin | 2.12 |
| Cocoa powder | 1.60 |
| Cherries, dried | 1.60 |
| Milk, full fat | 1.00 |
| Flavour | 1.11 |
| Cream, whipping | 0.88 |
| Glycerol | 0.46 |
| Potassium sorbate | 0.08 |
| Citric acid | 0.04 |

CORE WEIGHT:    28.0g, range 27.5 - 28.5g
FINISHED BAR:    34.0g +/- 3%

The weights of protein and carbohydrate are calculated for a bar:

| Protein, casein | 6.09 | Fructose | 2.52 |
| Protein, soy | 5.69 | Sorbitol/glycerol | 2.24 |
| Protein, cocoa | 0.20 | Sucrose/others | 1.84 |
| Protein, cherry | 0.02 | CHO, cocoa | 0.56 |
| Protein, milk | 0.02 | Glucose | 0.24 |
| | | CHO, milk | 0.03 |
| | | Polydextrose | 4.40 |
| | 12.02 | | 11.83 |

The bars thus contain 12.02 grams of protein and 11.83 grams total carbohydrate, of which 4.40 grams is the poorly digestible carbohydrate, polydextrose.
The overall nutritional profile of the bars is thus:

| Constituent: | Weight: | Factor: | Kcal: |
|---|---|---|---|
| Protein, casein | 6.09 | @4.27 | 26.00 |
| Protein, soy | 5.69 | @3.47 | 19.74 |
| Protein, cocoa | 0.20 | @1.83 | 0.37 |
| Protein, cherry | 0.02 | @3.35 | 0.07 |

(continued)

| Constituent: | Weight: | Factor: | Kcal: |
|---|---|---|---|
| Protein, milk | 0.02 | @4.27 | 0.09 |
| Fat, PKO | 1.92 | @8.84 | 16.97 |
| Lecithin | 0.90 | @7.00 | 6.30 |
| Soya oil | 0.85 | @8.84 | 7.51 |
| Fat, cocoa | 0.21 | @8.37 | 1.76 |
| Fat, milk | 0.10 | @8.79 | 0.88 |
| Cherry oil | 0.01 | @8.37 | 0.08 |
| Fructose | 2.52 | @3.60 | 9.07 |
| Sorbitol | 2.24 | @3.60 | 8.06 (+ glycerol) |
| Sucrose/others | 1.84 | @3.87 | 7.12 |
| CHO, cocoa | 0.56 | @1.33 | 0.74 |
| Glucose | 0.24 | @3.68 | 0.88 |
| CHO, milk | 0.03 | @3.87 | 0.12 |
| Polydextrose | 4.52 | @1.00 | 4.52 (+ fibre) |
| | | | 110.28 |

| BLACK FOREST BAR | Weight per bar (g) | Protein | Fat | CHO | Fibre |
|---|---|---|---|---|---|
| Ingredient: | | ---------------per bar--------------- | | | |
| Calcium caseinate | 6.695 | 6.09 | | | |
| Soy Protein Isolate Polydextrose, 70% | 6.410 6.280 | 5.69 | | | 4.40 |
| Fructose syrup 77% | 2.950 | | | 2.27 | |
| Sorbitol 70% | 2.950 | | | 2.06 | |
| Hydrogenated PKO | 1.923 | | 1.92 | | |
| Sucrose | 1.846 | | | 1.8 4 | |
| Cocoa powder | 135 | 0.20 | 0.21 | 0.56 | 0.06 |
| Lecithin | 0.905 | | 0.90 | | |
| Soya oil Cherries | 0.850 0.640 | 0.02 | 0.85 0.01 | 0.49 | 0.06 |
| Flavours | 0.467 | | | | |
| Milk | 0.400 | 0.01 | 0.01 | 0.02 | |
| Cream | 0.290 | 0.01 | 0.09 | 0.01 | |
| Glycerol | 0.180 | | | 0.18 | |
| Additives | 0.101 | | | | |
| Nutritional analysis | 34.022 | 12.02 | 4.00 | 7.43 | 4.52 |

## Example 15

A bar of Chocolate-Walnut flavour is made to the formulation 5 shown below, following the procedures described in Example 9. The bar is enrobed in the coating of Example 7.

| CHOCOLATE-WALNUT BAR | Weight in kg: |
|---|---|
| Ingredient: | |
| Protein Blend "A" | 29.54 |
| Polydextrose 70% | 15.62 |
| High fructose syrup | 14.68 |
| Soya oil | 2.12 |
| Lecithin | 2.12 |

(continued)

| CHOCOLATE-WALNUT BAR | Weight in kg: |
|---|---|
| Ingredient: | |
| Cocoa powder | 1.60 |
| Ground walnuts | 1.60 |
| Milk, full fat | 1.00 |
| Flavours | 0.99 |
| Cream, whipping | 0.88 |
| Glycerol | 0.46 |
| Potassium sorbate | 0.08 |
| Citric acid | 0.04 |

CORE WEIGHT:     35.0g, range 34.5 - 35.5g
FINISHED BAR:     41.0g +/- 3%

The bars contain 14.24 grams of protein and 13.76 grams total carbohydrate, of which 5.38 grams is the poorly digestible carbohydrate, polydextrose. Energy content is calculated at 135 kilocalories per bar.

### Example 16

A bar of Walnut-Malt flavour is made to the formulation shown below, following the procedures described in Example 9. The bar is enrobed in the coating of Example 7.

| WALNUT-MALT BAR | Weight per mix: | |
|---|---|---|
| Ingredient: | kgs | lbs |
| Protein Blend "A" | 29.54 | 65.13 |
| Walnut pieces | 2.04 | 4.50 |
| Flavours | 1.15 | 0.60 |
| Citric acid | 0.03 | 0.07 |
| Polydextrose 70% | 15.61 | 34.42 |
| Malt syrup (80%) | 14.54 | 32.06 |
| Lecithin | 2.50 | 4.65 |
| Glycerol | 0.45 | 1.00 |
| Water up to | 1.36 | 3.00 |
| TOTAL BATCH WEIGHT: | +/- 68.96 | +/- 152.02 |
| Coating (Example 7) | +/- 12.16 | +/- 26.82 |

CORE WEIGHT:     35.0g, range 34.5 - 35.5g
FINISHED BAR:     41.0g +/- 3%

The bars contain 14.77 grams of protein and 14.28 grams total carbohydrate, of which 5.58 grams is the poorly digestible carbohydrate, polydextrose. Energy content is calculated at 140 kilocalories per bar.

### Example 17

A bar of Strawberry-Cheesecake flavour is made to the formulation shown below, following the procedures described in Example 9. The bar is enrobed in the high protein yoghurt-based coating of Example 11.

| CHEESECAKE BAR | Weight per mix: | |
|---|---|---|
| Ingredient: | kgs | lbs |
| Protein Blend "A" | 29.54 | 65.13 |

(continued)

| CHEESECAKE BAR | Weight per mix: | |
| --- | --- | --- |
| Ingredient: | kgs | lbs |
| Cheddar cheese powder | 1.02 | 2.25 |
| Dried strawberries | 1.02 | 2.25 |
| Flavours | 1.15 | 1.12 |
| Citric acid | 0.03 | 0.07 |
| Polydextrose 70% | 15.61 | 34.42 |
| Honey | 7.65 | 16.87 |
| High fructose syrup | 6.89 | 15.19 |
| Lecithin | 2.50 | 4.65 |
| Glycerol | 0.45 | 1.00 |
| Water up to | 1.36 | 3.00 |
| TOTAL BATCH WEIGHT: | +/-68.96 | +/-152.02 |
| Coating (Example 11) | +/-12.16 | +/- 26.82 |

CORE WEIGHT:     35.0g, range 34.5 - 35.5g
FINISHED BAR:     41.0g +/- 3%

The bars contain 14.80 grams of protein and 14.30 grams total carbohydrate, of which 5.55 grams is the poorly digestible carbohydrate, polydextrose. Energy content is calculated at 140 kilocalories per bar.

### Example 18

A low calorie bar of Honey-Peanut flavour, fortified with vitamins and minerals to 20% of the U.S. RDA level, is made to the formulation shown below, following the procedures described in Example 9. The vitamin/mineral mix is used at a level of 0.5 grams per bar: composition of this mix is shown below. The bar is enrobed in the coating of Example 7.

| Honey Peanut BAR. Ingredient: | Weight in kg: | Experimental batch: | |
| --- | --- | --- | --- |
| | | g/85 g | g/bar: |
| Protein Blend "A" | 22.00 | 31.82 | 13.57 |
| Polydextrose, 70% | 28.00 | 40.50 | 17.27 |
| Cellulose | 2.20 | 3.18 | 1.36 |
| Peanut butter | 2.30 | 3.33 | 1.42 |
| Lecithin | 1.90 | 2.75 | 1.17 |
| Vitamin/mineral mix | 0.82 | 1.18 | 0.50 |
| Honey | 0.80 | 1.16 | 0.49 |
| Flavours | 1.08 | 1.56 | 0.67 |
| Glycerine | 0.34 | 0.49 | 0.21 |
| Aspartame | 0.06 | 0.09 | 0.04 |
| Potassium sorbate | 0.06 | 0.09 | 0.04 |
| Citric acid | 0.02 | 0.03 | 0.01 |
| TOTAL BATCH WEIGHT: | 59.26 | | |
| Coating (Example 7) | 10.45 | | |

CORE WEIGHT:     36.75 grams.
FINISHED BAR:     43.14 grams.

The weights of protein and carbohydrate are calculated for the bars; they contained, per bar, 14.00 grams of protein and 12.89 grams total carbohydrate, of which 12.09 grams is the poorly digestible carbohydrate, polydextrose.

Vitamin and mineral content, Example 18.

| Except for calcium, phosphorus and magnesium, all vitamins and minerals are 20% of U.S. RDA. | | |
|---|---|---|
| Vitamin or mineral: | Per bar: | Comments: |
| VITAMINS: | | |
| Vitamin A (i.u.) | 1000.00 | |
| Vitamin D, (i.u.) | 80.00 | |
| Vitamin E (i.u.) | 6.00 | |
| Vitamin C (mg) | 12.00 | Coated |
| Thiamin ($B_1$) (mg) | 0.30 | Coated |
| Riboflavin ($B_2$) (mg) | 0.34 | Coated |
| Niacinamide (mg) | 4.00 | |
| Vitamin $B_6$ (mg) | 0.40 | Coated |
| Vitamin $B_{12}$ (mcg) | 1.20 | Micrograms |
| Folic acid (mg) | 0.08 | |
| Biotin (mg) | 0.06 | |
| D-pantothenic acid (mg) | 2.00 | |
| MINERALS: | | |
| Calcium (mg) | 50.00 | |
| Phosphorus (mg) | 30.00 | |
| Iron (mg) | 3.60 | |
| Iodine (mg) | 0.03 | |
| Magnesium (mg) | 30.00 | |
| Copper (mg) | 0.40 | |
| Zinc (mg) | 3.00 | |
| Potassium (mg) | 75.00 | |
| Manganese (mg) | 0.40 | |
| Sodium (mg) | 50.00 | |

## Example 19

A protein bar of fig and raisin flavour, fortified with vitamins and minerals to 100% of the U.S. RDA level, is made to the formulation shown below, following the procedures described in Example 9. The vitamin/mineral mix is used at a level of 2.0 grams per bar; composition of this mix is shown below. The bar is enrobed in the coating of Example 7.

| PROTEIN-RAISIN FORTIFIED BAR | Weight in kg: |
|---|---|
| Ingredient: | |
| Protein Blend "A" | 26.00 |
| High fructose syrup | 15.00 |
| Raisin paste | 7.00 |
| Polydextrose 70% | 5.00 |
| Fig paste | 4.00 |
| Vitamin/mineral mix | 2.50 |

(continued)

| PROTEIN-RAISIN FORTIFIED BAR | Weight in kg: |
|---|---|
| Ingredient: | |
| Flavours | 1.50 |
| Peanut butter | 1.25 |
| Crisp rice | 1.25 |
| Lecithin | 1.00 |

CORE WEIGHT: 64.00 grams.
FINISHED BAR: 75.00 grams.

The weights of protein and carbohydrate are calculated for the bars; they contain, per bar, 25.80 grams of protein and 21.50 grams total carbohydrate, of which 3.50 grams is the poorly digestible carbohydrate, polydextrose.

Vitamin and mineral content, Example 19.

| Except for calcium, phosphorus and magnesium, all vitamins and minerals are 100% of U.S. RDA. | | |
|---|---|---|
| Vitamin or mineral: | Per bar: | Comments: |
| VITAMINS: | | |
| Vitamin A (i.u.) | 5000.00 | |
| Vitamin D, (i.u.) | 400.00 | |
| Vitamin E (i.u.) | 30.00 | |
| Vitamin C (mg) | 60.00 | Coated |
| Thiamin ($B_1$) (mg) | 1.50 | Coated |
| Riboflavin ($B_2$) (mg) | 1.70 | Coated |
| Niacinamide (mg) | 20.00 | |
| Vitamin $B_6$ (mg) | 2.00 | Coated |
| Vitamin $B_{12}$, (mcg) | 6.00 | Micrograms |
| Folic acid (mg) | 0.40 | |
| Biotin (mg) | 0.30 | |
| D-pantothenic acid (mg) | 10.00 | |
| MINERALS: | | |
| Calcium (mg) | 250.00 + | |
| Phosphorus (mg) | 150.00 + | |
| Iron (mg) | 18.00 | |
| Iodine (mg) | 0.15 | |
| Magnesium (mg) | 150.00 | |
| Copper (mg) | 2.00 | |
| Zinc (mg) | 15.00 | |
| Potassium (mg) | > 375.00 | |
| Manganese (mg) | 2.00 | |
| Sodium (mg) | < 250.00 | |

## Example 20

A blend of 50 parts by weight of a binding protein and 50 parts by weight of a filler protein is prepared in a ribbon blender and labelled "Protein blend E".

The table shows the different combinations used:

|  | Binding protein | *Filler* protein |
|---|---|---|
| 1) | Pea protein (WOODSTON GOLD) | caseinates (FARBEST 270) |
| 2) | Mira-Pro 121 | caseinates (FARBEST 290) |
| 3) | Soy protein (ARDEX-R) | Soy protein (PP-860) |
| 4) | Soy protein (ARDEX D-HD) | Pea protein (WOODSTONE GOLD) |

Dry ingredients corresponding to the combinations given below are placed in the bowl of a dough mixer and mixed gently until completely homogenous (5 minutes). Aqueous liquids (high fructose corn syrup, honey, polydextrose, etc..) are then added, mixed in (2 minutes) and followed by the oil and lecithin. After further gentle mixing, flavours are added the whole mixed for a further 2 or 3 minutes, and the resultant mix tested for consistency. When satisfactory, it is extruded through a Werner-Lehara* 16" continuous roll extruder equipped with a 1.25" x 0.5" die, 8" across. The resultant ribbons are cut with a pneumatic knife to an appropriate length for the indicated weight, and subsequently enrobed in a high protein coating of the composition indicated in Example 7.

| HONEY-PEANUT BAR | Weight per mix: | |
|---|---|---|
| Ingredients: | kgs | lbs |
| Protein blend E | 30.00 | 66.13 |
| Polydextrose 70% | 16.00 | 35.28 |
| Honey | 7.65 | 16.87 |
| High fructose syrup | 6.89 | 15.19 |
| Soya oil | 2.11 | 4.65 |
| Lecithin | 2.11 | 4.65 |
| Peanut butter | 2.04 | 4.50 |
| Water (up to) | 1.36 | 3.00 |
| Flavours | 0.45 | 1.00 |
| Potassium sorbate | 0.07 | 0.15 |
| Citric acid | 0.03 | 0.07 |
| TOTAL BATCH WEIGHT: | +/-69.86 | +/-154.00 |
| Coating (Example 7) | +/-12.18 | +/- 26.85 |

CORE WEIGHT:     35.0 g, range 34.5 - 35.5 g
FINISHED BAR:     41.0 g +/- 3%

The bars contain from 14 to 15 grams of protein and 13 to 13.80 grams total carbohydrate, of which 5.55 grams is the poorly digestible carbohydrate, polydextrose.

## Example 21

The procedure in Example 21 is followed, except that the ratio of binder to filler is changed to 75:25.

|  | BINDING PROTEIN | FILLER PROTEIN |
|---|---|---|
| 1) | Woodstone Gold* | Egg albumen |
| 2) | Mira-Pro 121* | Refit |
| 3) | Arex-R* | Alanate 312* |
| 4) | Ardex D-HD* | PP-860* |

The bars contain from 14 to 15 grams of proteins and 13 to 13.80 grams total carbohydrate, of which 5.55 grams is the poorly digestible carbohydrate, polydextrose.

## Example 22

The procedure of Example 21 was followed except that the protein used consists of a single protein only:

1) Soy protein (Ardex-R*)
2) Pea protein (Woodstone Gold*)
Bars made with Ardex-R* contain 14.8 grams of protein and 13.4 grams of carbohydrate, of which about 5.5 grams is the poorly digestible polydextrose. Protein level in bars made with pea protein is about 14.6 grams, reflecting the lower 15 purity of the material.

## Example 23

The procedure of Example 20 is followed, except that the 20 ratio of binder to filler is changed to 25:75.

|    | BINDING PROTEIN | FILLER PROTEIN |
|----|----|----|
| 1) | Soy Protein (PP-610*) | Calcium caseinate denatured by heat treatment |
| 2) | Soy Protein (Profam S290*) | Soy (PP-860*) |
| 3) | Soy Protein (Ardex-R) | Pea Protein (Woodstone Gold*) |

Composition of these bars ranged from 14.5 to 15 grams protein, with 14 to 14.5 grams carbohydrate.

## Example 24

A liquid blend is prepared containing glycerine, water, oligofructose syrup (77% solids), monoglycerides, liquid flavours (apple, cinnamon; in propylene glycol and water) and sweeteners (sucralose, liquorice extract). This is maintained at 25°C-28°C.

| INGREDIENT: | WEIGHT IN KGS: |
|----|----|
| GLYCERINE (USP) | 18.996 |
| WATER | 7.322 |
| OLIGOFRUCTOSE SYRUP | 6.032 |
| FLAVOURS | 1.886 |
| MONOGLYCERIDES | 0.218 |
| SWEETENERS | 0.145 |

The dry blend for the bar is prepared using the ingredients and quantities indicated below:

| INGREDIENT: | WEIGHT IN KGS: |
|----|----|
| WHEY PROTEIN ISOLATE (BIPRO) | 10.690 |
| SOY PROTEIN ISOLATE (PROFAM 891) | 10.226 |
| GELATIN, EDIBLE | 8.918 |
| CASEINATE, FARBEST 2 00 | 8.457 |
| CASEIN (ACID) | 4.974 |
| WHEY PROTEIN CONCENTRATE (75%) | 1.984 |
| MILK MINERAL CONCENTRATE | 0.637 |
| VITAMIN-MINERAL PREMIX | 1.118 |

The dry ingredients are thoroughly mixed in a dough mixer for 2 minutes, after which the liquid mix is blended in, and the whole mixed for a further 5 minutes. At that time, 3.39 kg of a fat preparation (a water-in-oil emulsion containing soya bean, canola and palm kernel oils with lecithin) is added, and the entire mixture further blended for 1 minute. The resultant plastic mass is then formed into a slab on a 24" slab former. The slab is cooled, slit into ribbons, and the ribbons guillotined to give bar cores of about 51 grams. These cores are coated with a white yoghurt-based coating to give enrobed bars of 60 grams, which are cooled, individually sealed into Mylar wrappers, and packed in boxes.
The nutritional data for these bars is shown below.

| Nutritional information per unit: | | | |
|---|---|---|---|
| NUTRIENT: | CONTENT: | (US) %DV: | (CDN) %RNI: |
| Protein | 26.013g | 52 | -- |
| Carbohydrate, total | 18.707g | 6 | -- |
| Fat | 5.061g | 8 | -- |
| Moisture | 7.636g | -- | -- |
| Total dietary fibre | 2.319g | 9 | -- |
| Kilocalories (Atwater) | 208 Kcal | -- | -- |
| Kilojoules | 872 Kj | -- | -- |
| Cholesterol | 6 mg | 2 | -- |
| Saturated fat | 3.030g | 15 | -- |
| Mono-unsaturated fat | 0.847g | -- | -- |
| Poly-unsaturated fat | 0.842g | -- | -- |
| Total omega-3 EFAs | 0.167g | -- | -- |
| Total omega-6 EFAs | 0.673g | -- | -- |
| Linoleic acid | 0.673g | -- | -- |
| Potassium | 75mg | 2 | -- |
| Sodium | 147mg | 6 | -- |
| Calcium | 228mg | 23 | 21 |
| Phosphorus | 212mg | 21 | 19 |
| Vitamin A | 1508 IU | 30 | 45 |
| Vitamin D | 121 IU | 30 | 61 |
| Vitamin E | 10.005 IU | 33 | 100 |
| Vitamin C | 18.143 mg | 30 | 30 |
| Thiamine | 0.465 mg | 31 | 36 |
| Riboflavin | 0.534 mg | 31 | 33 |
| Niacin | 6.091 mg | 30 | 26 |
| Vitamin B6 | 0.600 mg | 30 | 33 |
| Vitamin B12 | 2.209 mcg | 37 | 110 |
| Folate | 133 mcg | 33 | 60 |
| Biotin | 90 mcg | 30 | -- |
| Pantothenate | 3.005 mg | 30 | 43 |
| Iron | 6.213 mg | 35 | 44 |
| Iodine | 45 mcg | 30 | 28 |
| Magnesium | 24 mg | 6 | 9 |
| Copper | 0.674 mg | 34 | -- |
| Zinc | 5.112 mg | 34 | 57 |
| Manganese | 0.645 mg | 32 | -- |

| % CALORIES FROM PROTEIN | 48 |
|---|---|
| % CALORIES FROM CARBOHYDRATE | 30 |
| % CALORIES FROM FAT | 21 |
| TOTAL CALORIES (4-4-9 FACTORS) | 217 |

| Carbohydrate, total | 18.707 | |
|---|---|---|
| Soluble fibre | 2.307 | |
| Insoluble fibre | | 0.012 |

(continued)

| | | |
|---|---|---|
| Sugars | 1.191 | |
| Sugar alcohols | | 14.812 |
| Other carbohydrate | 0.385 | |

## Example 25

A liquid blend is prepared containing glycerine, water, maltitol syrup (77% solids), high fructose corn syrup (77% solids), peanut butter, lecithin and liquid flavours (peanut, vanilla; in propylene glycol and water). This is maintained at 25°C-28°C.

| INGREDIENT: | WEIGHT IN KGS: |
|---|---|
| GLYCERINE (USP) | 16.097 |
| MALTITOL SYRUP | 5.913 |
| WATER | 5.405 |
| HIGH FRUCTOSE CORN SYRUP | 4.060 |
| PEANUT BUTTER | 2.216 |
| FLAVOURS | 2.739 |
| LECITHIN, LIQUID | 0.548 |

The dry blend for the bar is prepared using the ingredients and quantities indicated below:

| INGREDIENT: | WEIGHT IN KGS: |
|---|---|
| CASEINATE, FARBEST 290 | 14.995 |
| WHEY PROTEIN ISOLATE (BIPRO) | 10.926 |
| GELATIN, HYDROLYZED | 10.819 |

| | |
|---|---|
| SOY PROTEIN ISOLATE (PP710/760 BLEND) | 5.862 |
| MILK MINERAL CONCENTRATE | 0.400 |
| PEANUT FLOUR | 3.499 |
| MINERAL MIX | 0.508 |

The dry ingredients are thoroughly mixed in a dough mixer for 2 minutes, after which the liquid mix is blended in, and the whole mixed for a further 5 minutes. At that time, 0.914 kg of a fat preparation (a water-in-oil emulsion containing soya bean, canola and palm kernel oils with lecithin) is added, and the entire mixture further blended for 1 minute. The resultant plastic mass is then formed into a slab on a 24" slab former. The slab is cooled, slit into ribbons, and the ribbons guillotined to give bar cores of about 68 grams. These cores are coated with a dark chocolate compound coating to give enrobed bars of 80 grams, which are cooled, individually sealed into Mylar wrappers, and packed in boxes.

The nutritional data for these bars is shown below (note that minerals added consist solely of calcium, phosphorus, sodium and magnesium).

| Nutritional information per unit: | | | |
|---|---|---|---|
| NUTRIENT: | CONTENT: | (US) %DV: | (CDN) %RNI: |
| Protein | 34.991 g | 70 | -- |
| Carbohydrate, total | 25.311 g | 8 | -- |
| Fat | 8.256 g | 13 | -- |
| Moisture | 8.845 g | -- | -- |
| Total dietary fibre | 1.024 g | 4 | -- |
| Kilocalories (Atwater) | 311 Kcal | -- | -- |
| Kilojoules | 1301 Kj | -- | -- |

(continued)

| Nutritional information per unit: | | | |
| --- | --- | --- | --- |
| NUTRIENT: | CONTENT: | (US) %DV: | (CDN) %RNI: |
| Cholesterol | 1 mg | 0 | -- |
| Saturated fat | 4.043 g | 20 | -- |
| Mono-unsaturated fat | 2.113 g | -- | -- |
| Poly-unsaturated fat | 1.511 g | -- | -- |
| Total omega-3 EFAs | 0.120 g | -- | -- |
| Total omega-6 EFAs | 1.390 g | -- | -- |
| Linoleic acid | 1.390 g | -- | -- |
| Potassium | 98 mg | 3 | -- |
| Sodium | 190 mg | | -- |
| Calcium | 313 mg | 31 | 28 |
| Phosphorus | 277 mg | 28 | 25 |
| Vitamin A | 5 IU | 0 | 0 |
| Vitamin D | 1 IU | 0 | 0 |
| Vitamin E | 0.405 IU | 0 | 4 |
| Vitamin C | 0.265 mg | 0 | 0 |
| Thiamine | 0.044 mg | 3 | 3 |
| Riboflavin | 0.056 mg | 3 | 4 |
| Niacin | 0.400 mg | 2 | 2 |
| Vitamin B6 | 0.013 mg | 0 | 0 |
| Vitamin B12 | 0.701 mcg | 12 | 35 |
| Folate | 14 mcg | 4 | 7 |
| Biotin | 2 mcg | 0 | -- |
| Pantothenate | 0.124 mg | 0 | 2 |
| Iron | 1.357 mg | 8 | 10 |
| Iodine | 0 mcg | 0 | 0 |
| Magnesium | 22 mg | 5 | 9 |
| Copper | 0.095 mg | 5 | -- |
| Zinc | 1.192 mg | 8 | 13 |
| Manganese | 0.115 mg | 6 | -- |

| | |
| --- | --- |
| % CALORIES FROM PROTEIN | 45 |
| % CALORIES FROM CARBOHYDRATE | 31 |
| % CALORIES FROM FAT | 24 |
| TOTAL CALORIES (4-4-9 FACTORS) | 312 |

| | |
| --- | --- |
| Carbohydrate, total | 25.311 |

| | |
| --- | --- |
| Soluble fibre | 0.125 |
| Insoluble fibre | 0.899 |
| Sugars | 6.925 |
| Sugar alcohols | 16.168 |
| Other carbohydrate | 1.191 |

Additional advantages, features and modifications will readily occur to those skilled in the art. Therefore, the invention in its broader aspects is not limited to the specific details, and representative devices, shown and described herein.

Accordingly, various modifications may be made without departing from the spirit or scope of the general inventive concept as defined bye-the appended claims and their equivalents.

As used herein and in the following claims, articles such as "the", "a" and "an" can connote the singular or plural.

All documents referred to herein are specifically incorporated herein by reference in their entireties.

## FURTHER ASPECTS OF THE INVENTION

Further aspects of the invention are now set out in the following numbered paragraphs; it is to be understood that the invention encompasses these aspects:

1. A smooth and chewy low calorie confectionery bar comprising: (A) proteinaceous material having low water absorption properties and medium to high emulsification properties; (B) carbohydrate material selected from the group consisting of: digestible carbohydrate, indigestible carbohydrate, and a mixture thereof, wherein said proteinaceous material and said carbohydrate material are present in a relative weight ratio of from 1:0 to 1:0.999.

2. The confectionery bar of Paragraph 1, wherein said proteinaceous material is selected from the group consisting of: binding proteins having low water absorption porperties and medium to high emulsification properties, filler proteins having low water absorption and low viscosity, and mixtures thereof.

3. The confectionery bar of Paragraph 2, wherein said binding protein and filler protein are present in a relative ratio of from 100:0 to 0:100 when said filler protein is selected from the group consisting of: caseinates, and soy proteins.

4. The confectionery bar of Paragraph 2, wherein said binding protein and filler protein are present in a relative ratio of from 75:25 to 25:75.

5. The confectionery bar of Paragraph 2, wherein said binding protein and filler protein are present in a relative ratio of from 65:35 to 40:60.

6. The confectionery bar of Paragraph 2, wherein said binding protein is selected from the group consisting of: gelatin, hydrolyzed gelatin, soy protein isolate, functional whey protein, functional whole milk protein, pea protein, partially denatured egg albumen, and partially devitalized wheat gluten.

7. The confectionery bar of Paragraph 2, wherein said filler protein is selected from the group consisting of: gelatin, hydrolyzed gelatin, calcium caseinate, soy protein isolate, denatured whey protein, pea protein, devitalized wheat gluten, and denatured egg albumen.

8. A homogenous low calorie confectionery bar which is sufficiently soft to permit mastication, said bar comprising: (A) proteinaceous material having a water absorption property of less than 2.5 grams of water per gram of protein at pH 5.5 and medium to high emulsifying capacity; and (B) carbohydrate material selected from the group consisting of digestible carbohydrate, indigestible carbohydrate and a mixture thereof; wherein said bar is produced by cold extrusion; and wherein said proteinaceous material and said carbohydrate material are both present in said bar in a protein : carbohydrate relative weight ratio higher than 1, and wherein said proteinaceous material comprises a filler protein and a binding protein.

9. The confectionery bar of Paragraph 8, wherein said proteinaceous material is selected from the group consisting of: binding proteins having a water absorption property of less than 2.5 grams of water per gram of protein at pH 5.5 and wherein said binding proteins are capable of emulsification filler proteins having a water absorption property of less than 2.5 grams of water per gram of protein at pH 5.5 and wherein said binding proteins are capable of emulsification and mixtures thereof.

10. The confectionery bar of Paragraph 8, wherein said binding protein and filler protein are present in a relative ratio of from 100:0 to 0:100 when said filler protein is selected from the group consisting of: caseinates, and soy proteins.

11. The confectionery bar of Paragraph 8, wherein said binding protein and filler protein are present in a relative ratio of from 75:25 to 25:75.

12. The confectionery bar of Paragraph 8, wherein said binding protein and filler protein are present in a relative ratio of from 65:35 to 40:60.

13. The confectionery bar of Paragraph 8, wherein said binding protein is selected from the group consisting of: gelatin, hydrolyzed gelatin, soy protein isolate, functional whey protein, functional whole milk protein, pea protein, partially denatured egg albumen, and partially devitalized wheat gluten.

14. The confectionery bar of Paragraph 8, wherein said filler protein is selected from the group consisting of: gelatin, hydrolyzed gelatin, calcium caseinate, soy protein isolate, denatured whey protein, pea protein, devitalized wheat gluten, and denatured egg albumen.

15. A use of a homogenous low calorie confectionery bar which is sufficiently soft to permit mastication for inducing or maintaining weight loss in a human, said bar comprising: (A) proteinaceous material having a water absorption property of less than 2.5 grams of water per gram of protein at pH 5.5 and medium to high emulsifying capacity; and (B) carbohydrate material selected from the group consisting of digestible carbohydrate, indigestible carbohydrate and a mixture thereof; wherein said bar is produced by cold extrusion; and wherein said proteinaceous material and said carbohydrate material are both present in said bar in a protein : carbohydrate relative weight ratio higher than 1, and wherein said proteinaceous material is a filler protein and a binding protein.

16. The use of Paragraph 15, wherein said proteinaceous material is selected from the group consisting of: binding proteins having a water absorption property of less than 2.5 grams of water per gram of protein at pH 5.5 and wherein said binding proteins are capable of emulsification filler proteins having a water absorption property of less than 2.5 g-rams of water per gram of protein at pH 5.5 and wherein said binding proteins are capable of emulsification and mixtures thereof.

17. The use of Paragraph 15, wherein said binding protein and filler protein are present in a relative ratio of from 100:0 to 0:100 when said filler protein is selected from the group consisting of: caseinates, and soy proteins.

18. The use of Paragraph 15, wherein said binding protein and filler protein are present in a relative ratio of from 75:25 to 25:75.

19. The use of Paragraph 15, wherein said binding protein and filler protein are present in a relative ratio of from 65:35 to 40:60.

20. The use of Paragraph 15, wherein said binding protein is selected from the group consisting of: gelatin, hydrolyzed gelatin, soy protein isolate, functional whey protein, functional whole milk protein, pea protein, partially denatured egg albumen, and partially devitalized wheat gluten.

21. The use of Paragraph 15, wherein said filler protein is selected from the group consisting of: gelatin, hydrolyzed gelatin, calcium caseinate, soy protein isolate, denatured whey protein, pea protein, devitalized wheat gluten, and denatured egg albumen.

22. A use of a homogenous low calorie confectionery bar which is sufficiently soft to permit mastication for increasing muscle mass in a human, said bar comprising: (A) proteinaceous material having a water absorption property of less than 2.5 grams of water per gram of protein at pH 5.5 and medium to high emulsifying capacity; and (B) carbohydrate material selected from the group consisting of digestible carbohydrate, indigestible carbohydrate and a mixture thereof; wherein said bar is produced by cold extrusion; and wherein said proteinaceous material and said carbohydrate material are both present in said bar in a protein : carbohydrate relative weight ratio higher than 1, and wherein said proteinaceous material is a filler protein and a binding protein.

23. The use of Paragraph 22, wherein said proteinaceous material is selected from the group consisting of: binding proteins having a water absorption property of less than 2.5 grams of water per gram of protein at pH 5.5 and wherein said binding proteins are capable of emulsification filler proteins having a water absorption property of less than 2.5 g-rams of water per gram of protein at pH 5.5 and wherein said binding proteins are capable of emulsification and mixtures thereof.

**EP 1 302 111 A1**

24. The use of Paragraph 22, wherein said binding protein and filler protein are present in a relative ratio of from 100:0 to 0:100 when said filler protein is selected from the group consisting of: caseinates, and soy proteins.

25. The use of Paragraph 22, wherein said binding protein and filler protein are present in a relative ratio of from 75:25 to 25:75.

26. The use of Paragraph 22, wherein said binding protein and filler protein are present in a relative ratio of from 65:35 to 40:60.

27. The use of Paragraph 22, wherein said binding protein is selected from the group consisting of: gelatin, hydrolyzed gelatin, soy protein isolate, functional whey protein, functional whole milk protein, pea protein, partially denatured egg albumen, and partially devitalized wheat gluten.

28. The use of Paragraph 22, wherein said filler protein is selected from the group consisting of: gelatin, hydrolyzed gelatin, calcium caseinate, soy protein isolate, denatured whey protein, pea protein, devitalized wheat gluten, and denatured egg albumen.

**References**

Alam, S.Q., Mannino, S.J., Alam, B.S. and McDonough, K., 1995, Effect of essential fatty acid deficiency on forskolin binding sites, adenylate cyclase and cyclic AMP-dependent protein kinase activity, the levels of G proteins and ventricular function in rat heart. J. Molecul. Cellul. Cardiol., 27, 1593 - 1604.

Anderson, I.M., Parry-Billings, M., Newsholme, E.A., Fairburn, C.G. and Cowen, P.J., 1990, Dieting reduces plasma tryptophan and alters brain 5-HT function in women. Psychol. Med., 20, 785- 791.

Apfelbaum, M., Bostsarron, J., Brigant, L and Supin, H., 1967, La composition de poids diete hydrique; effets de 1a suplementation protidique. Gastroenterologie, 108, 121 - 134.

Apfelbaum, M., Bagiagta, F., Giachetti, I. and Serog, P., 1981, Effects of a high protein, low energy diet in ambulatory subjects with special reference to nitrogen balance. Int. J. Obesity, 5, 117 - 130.

Baird, I.M., Parsons, R.L. and Howard, A.N., 1974, Clinical and metabolic studies of chemically defined diets in the management of obesity. Metabolism, 23, 645 - 657.

Bettens, C., Heraief, E. and Burckhardt, P., 1989, Short and long term results of a progressive reintroduction of carbohydrates (PRCH) after a protein-sparing modified fast (PSMF). Int. J. Obes., 13 (Suppl. 2), 113- 117.

Bistrian, B.R., Sherman, M. & Young, V., 1981, The mechanisms of protein sparing in fasting supplemented by protein and carbohydrate. J. Clin. Endocrinol. Metab., 53, 874 - 878.

Bucci, L.R., 1994, Nutritional ergogenic aids. Nutrition in Exercise and Sport, Ed. Wolinsky and Hickson, 2nd Ed., CRC Press, Boca Raton, 306.

Clandinin, M.T., Cheema, S., Field, C.J. and Baracos, V.E., 1992, Impact of dietary essential fatty acids on insulin responsiveness in adipose tissue, muscle and liver. Essential Fatty Acids and Eicosanoids, Ed. Sinclair and Gibson, AOCS, Champaign, 416 - 420.

Cunnane, S.C., McAdoo, K.R. and Horrobin, D.F., 1986, n-3 Essential fatty acids decrease weight gain in genetically obese mice. Brit. J. Nutr., 56, 383 - 393.

Davidson, S., Passmore, R., Brock, J.F. and Truswell, A.S., 1975, in Human Nutrition and Dietetics, 26 - 27, Churchill Livingstone, Edinburgh, London and New York.

Davies, H.J., Baird, I.M., Fowler, J., Mills, I.H., Baillie, J.E., Rattan, S. and Howard, A.N., 1989, Metabolic responses to low- and very-low-calorie diets. Am. J. Clin. Nutr., 49, 745 - 751.

Davis, P.G. and Phinney, S.D., 1990, Differential effects of two very low calorie diets on aerobic and anaerobic performance. Int. J. Obes., 14, 779 - 787.

Donnelly, J.E., Pronk, N.P., Jacobsen, D.J. and Jakicic, J.M., 1991, Effects of a very-low -calorie diet and physical-training regimens on body composition and resting metabolic rate in obese females. Am. J. Clin. Nutr., 54, 56 - 61.

Duncan, G.C., Jenson, W.K., Fraser, R.L. and Cristofori, F.C., 1962, Correction and control of intractable obesity. J. Am. Med. Assoc., 181, 309 - 312.

Flatt, J.P., 1995, Body composition, respiratory quotient, and weight maintenance. Am. J. Clin. Nutr., 62, 1107S - 1117S.

Formiguera, S.X., Barbany, C.M., Carillo Blanchar, M., Galan Ortega, A., Herrero Espeso, P. and Foz Sala, M., 1991, Modiflcaçiones antropometricas y balance de nitrogeno en paçientes con obesidad morbida tratados con dieta muy baja en calorias. Med. Clin. (Barc.), 96, 401 - 404.

Garrow, J.S., 1978, Energy balance and obesity in man, 95 - 98, Elsevier/North Holland and Biomedical Press, Amsterdam, New York, Oxford.

Goubern, M., Yazbeck, J., Senault, C. and Portet, R., 1990, Non-shivering thermogenesis and brown adipose tissue activity in essential fatty acid deficient rats. Arch. Int. Physiol. Biochim., 98, 193 - 199.

Gougeon-Reyburn, R., Leiter, L.A., Yale, J.-F. and Marliss, E.B., 1989, Comparison of daily diets containing 400 kcal (1.67MJ) of either protein or glucose, and their effects on the response to subsequent total fasting in obese subjects. Am. J. Clin. Nutr., 50, 746 - 758.

Gougeon, R., 1992, The metabolic response to two very low energy diets (VLED) of differing amino acid composition during weight reduction. Int. J. Obesity, 16, 1005 - 1012.

Gougeon, R., Hoffer, L.J., Pencharz, P.B. and Marliss, E.B., 1992a, Protein metabolism in obese subjects during a very low energy diet. Am. J. Clin. Nutr., 56, 249S - 254S.

Gougeon, R., Pencharz, P.B. and Marliss, E.B., 1992b, Protein turnover during two very low energy diets (VLED) od differing amino acids [aa] composition in obesity. 61st Annual Meeting, The Royal College of Physicians and Surgeons of Canada.

Heleniak, E.P. and Aston B., 1989, Prostaglandins, brown fat and weight loss. Med. Hypotheses, 28, 13 - 33.

Hoffmans, M., Pfeifer, W.A., Gundlach, B.L., Nijkrake, H.G.M., Oude Ophuis, A.J.M. and Hautvast, J.G.A.J., 1979, Resting metabolic rate in obese and normal weight women. Int. J. Obesity, 3, 111 - 118.

James, W.P.T., 1983, Obesity. In Oxford Textbook of Medicine, Eds. Weatherall, Ledingham and Warrell, 8.26 - 8.42. Oxford University Press, Oxford.

Jéquier, E., 1987, Energy utilization in human metabolism. Ann. N.Y. Acad. Sci., 499, 73 - 83.

Jéquier, E., 1989, Energy metabolism in human obesity. Soz. Praventium, 34, 58 - 62.

Jones, D., 1979, Graaft u uw graf met uw tanden?. Chemisch Weekblad(M), 778 - 781.

Jones, D., 1981, The Treatment of Obesity: diet or drug? Trends in Pharmacological Sciences, 2, 199 - 202.

Jones, D., unpublished observations: Internal Reports, Organon International B.V., 1975 - 1979.

Jones, D., 1990, Neglected nutrients in dietary weight reduction programmes: the essential fatty acids! The Bariatrician (Am. J. Bar. Med.), Fall 1990, 11 - 15.

Jones, P.J.H. and Schoeller, D.A., 1988, Polyunsaturated:saturated ratio of diet fat influences energy substrate utilization in the human. Metabolism, 37, 145 - 151.

Lindner, P.G. and Blackburn, G.L., 1976, Multidisciplinary approach to obesity utilizing fasting modified by protein sparing therapy. Obesity/Bariatric Medicine, 5, 198 - 216.

Nathan, C. and Rolland, Y., 1987, Pharmacological treatments that affect CNS activity: serotonin. Ann. N.Y. Acad. Sci., 1987, 499, 277 - 296.

Oi, Y., Okuda, T., Koishi, H., Koh, H., Waki, M., Kurata, M. & Nambu, S, 1987, Relationship between protein intake and nitrogen balance in obese patients on low energy diet. J. Nutr. Sci. Vitaminol., 33, 219 - 226.

Pasquali, R., Casimirri, F. & Melchionda, N., 1987, Protein metabolism in obese patients during very low calorie mixed diets containing different amounts of protein and carbohydrate. Metabolism, 36, 1141 - 1148.

Rabast, U., Schönborn, J. and Kasper, H., 1979, Dietetic treatment of obesity with low and high-carbohydrate diets: comparative studies and clinical results. Int. J. Obesity, 3,201 - 211.

Silverstone, J.T., Stark, J.E. and Buckle, R.M., 1966, Hunger during total starvation. Lancet 1:1343.

Smith, R., and Williamson, D.H., 1983, Biochemical background. In Oxford Textbook of Medicine, Eds. Weatherall, Ledingham and Warrell, 8.4 - 8.12. Oxford University Press, Oxford.

Takada, R., Saitoh, M. and Mori, T., 1994, Dietary gamma-linolenic acid-enriched oil reduces body fat content and induces liver enzyme activities relating to fatty acid beta-oxidation in rats. J.Nutr., 124, 469 - 474.

Vasquez, J.A., Morse, E.L. and Adibi, S.A., 1985, Effect of dietary fat, carbohydrate and protein on branched-chain amino acid catabolism during caloric restriction. J. Clin. Invest., 76, 737 - 743.

Vasquez, J.A., Kazi, U., and Madani, N., 1995, Protein metabolism during weight reduction with very-low-energy diets: evaluation of the independent effects of protein and carbohydrate on protein sparing. Am. J. Clin. Nutr., 62, 93 - 103.

Wadden, T.A., Stunkard, A.J., Brownell, K.D. and Day, S.C., 1985, A comparison of two very-low-calorie diets: protein sparing modified fast versus protein formula liquid diet. Am. J. Clin. Nutr., 41, 533 - 539.

Wurtman, R.J., 1987, Dietary treatments that affect brain neurotransmitters: effects on calorie and nutrient intake. Ann. N.Y. Acad. Sci., 1987, 499, 179 - 190.

All documents referred to are specifically incorporated herein by reference in their entireties.

**Claims**

1. A low calorie confectionery comprising:

(a) proteinaceous material having low water absorption properties and medium to high emulsification properties;
(b) carbohydrate material selected from the group consisting of: digestible carbohydrate, indigestible carbohydrate, and a mixture thereof,

wherein said proteinaceous material and said carbohydrate material are present in a relative weight ratio of from 1:0 to 1:0.999.

2. A confectionery according to Claim 1, in which the said proteinaceous material is selected from the group consisting of: binding proteins having low water absorption porperties and medium to high emulsification properties, filler proteins having low water absorption and low viscosity, and mixtures thereof.

3. A confectionery comprising:

(a) proteinaceous material having a water absorption property of less than 2.5 grams of water per gram of protein at pH 5.5 and medium to high emulsifying capacity; and
(b) carbohydrate material selected from the group consisting of digestible carbohydrate, indigestible carbohydrate and a mixture thereof;

wherein said proteinaceous material and said carbohydrate material are both present in said confectionery in a protein : carbohydrate relative weight ratio higher than 1, and wherein said proteinaceous material comprises a filler protein and a binding protein.

4. Use of a confectionery for inducing or maintaining weight loss said confectionery comprising:

(a) proteinaceous material having a water absorption property of less than 2.5 grams of water per gram of protein at pH 5.5 and medium to high emulsifying capacity; and
(b) carbohydrate material selected from the group consisting of digestible carbohydrate, indigestible carbohydrate and a mixture thereof;

wherein said proteinaceous material and said carbohydrate material are both present in said confectionery in a protein : carbohydrate relative weight ratio higher than 1, and wherein said proteinaceous material is a filler protein and a binding protein.

5. Use of a confectionery for increasing muscle mass, said confectionery comprising:

(a) proteinaceous material having a water absorption property of less than 2.5 grams of water per gram of protein at pH 5.5 and medium to high emulsifying capacity; and
(b) carbohydrate material selected from the group consisting of digestible carbohydrate, indigestible carbohydrate and a mixture thereof;

wherein said proteinaceous material and said carbohydrate material are both present in said confectionery in a protein : carbohydrate relative weight ratio higher than 1, and
wherein said proteinaceous material is a filler protein and a binding protein.

6. A confectionery according to Claim 3 or a use according to Claim 4 or 5, in which the proteinaceous material is selected from the group consisting of: binding proteins having a water absorption property of less than 2.5 grams of water per gram of protein at pH 5.5 and wherein said binding proteins are capable of emulsification, filler proteins having a water absorption property of less than 2.5 grams of water per gram of protein at pH 5.5 and wherein said binding proteins are capable of emulsification, and mixtures thereof.

7. A confectionery or use according to any preceding claim, in which the binding protein and filler protein are present in a relative ratio of from 100:0 to 0:100 when said filler protein is selected from the group consisting of: caseinates, and soy proteins.

8. A confectionery or use according to any preceding claim, in which the binding protein and filler protein are present in a relative ratio of from 75:25 to 25:75.

9. A confectionery or use according to any preceding claim, in which binding protein and filler protein are present in a relative ratio of from 65:35 to 40:60.

10. A confectionery or use according to any preceding claim, in which binding protein is selected from the group consisting of: gelatin, hydrolyzed gelatin, soy protein isolate, functional whey protein, functional whole milk protein, pea protein, partially denatured egg albumen, and partially devitalized wheat gluten.

11. A confectionery or use according to any preceding claim, in which filler protein is selected from the group consisting of: gelatin, hydrolyzed gelatin, calcium caseinate, soy protein isolate, denatured whey protein, pea protein, devitalized wheat gluten, and denatured egg albumen.

12. A confectionery or use according to any preceding claim, in which the confectionery is smooth and chewy, homogenous or sufficiently soft to permit mastication.

13. A confectionery or use according to any preceding claim, in which the confectionery comprises a confectionery bar, preferably produced by cold extrusion.

14. A method of inducing or maintaining weight loss, the method comprising ingestion of a confectionery according to any preceding claims.

15. A method of increasing muscle mass, the method comprising ingestion of a confectionery according to any preceding claim.

**European Patent Office**

**EUROPEAN SEARCH REPORT**

Application Number

EP 01 30 8595

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CA 2 034 145 A (JONES DENNIS) 16 July 1992 (1992-07-16) * the whole document * | 1-15 | A23G3/00 A23L1/305 |
| | | | |
| | | | **TECHNICAL FIELDS SEARCHED (Int.Cl.7)** |
| | | | A23G A23L |

The present search report has been drawn up for all claims

| Place of search | Date of completion of the search | Examiner |
|---|---|---|
| THE HAGUE | 15 March 2002 | Guyon, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 30 8595

This annex lists the patent family membersrelating to the patent documents cited in the above-mentioned European search report.
The members are as contained in the European Patent Office EDP file on
The European Patent Office is in no way liable for these particulars which are merely given for the purpose of information.

15-03-2002

| Patent document cited in search report | | Publication date | Patent family member(s) | Publication date |
|---|---|---|---|---|
| CA 2034145 | A | 16-07-1992 | CA 2034145 A1 | 16-07-1992 |